# EUROPEAN PATENT SPECIFICATION

(11) **EP 4 043 102 B1**
(45) Date of publication and mention of the grant of the patent: **25.06.2025**
(21) Application number: 20873963.1
(22) Date of filing: 30.09.2020
(51) Int. Cl.: B01J 23/63, B01J 37/00, F01N 3/28, F01N 3/10

(54) **HONEYCOMB UNIT USED FOR PURIFICATION OF EXHAUST GAS, AND METHOD FOR MANUFACTURING HONEYCOMB UNIT**
WABENEINHEIT ZUR ABGASREINIGUNG UND VERFAHREN ZUR HERSTELLUNG EINER WABENEINHEIT
UNITÉ EN NID D'ABEILLES UTILISÉE POUR LA PURIFICATION DE GAZ D'ÉCHAPPEMENT, ET PROCÉDÉ DE FABRICATION D'UNE UNITÉ EN NID D'ABEILLES

(30) Priority: 08.10.2019 JP 2019185213
(43) Date of publication of application: 17.08.2022
(73) Proprietor: NIPPON STEEL Chemical & Material Co., Ltd., Tokyo 103-0027 (JP)
(72) Inventor: MURAMATSU, Kei, Tokyo 103-0027 (JP); KONYA, Shogo, Tokyo 103-0027 (JP); MIYAMOTO, Kazuki, Tokyo 103-0027 (JP)
(74) Representative: J A Kemp LLP
(86) International application number: PCT/JP2020/037065
(87) International publication number: WO 2021/070691

(56) References cited:
- EP-A1- 0 658 390
- WO-A1-2018/159007
- DE-A1- 10 250 894
- JP-A- 2012 215 085
- JP-A- H05 253 493
- JP-A- H07 136 525

## Description

### Technical Field

The present invention relates to a honeycomb unit used for removing air pollutants contained in exhaust gas.

### Background Art

As a purification device that purifies exhaust gas exhausted from an internal combustion engine, there has been known such a honeycomb unit that includes: a honeycomb body formed by stacking a flat foil and a corrugated foil; and an outer mantle in which the honeycomb body is housed. A honeycomb unit including a honeycomb body carrying a catalyst thereon (also referred to as a catalytic converter) is arranged in an exhaust gas passage, so that the exhaust gas passing through the catalytic converter comes into contact with the catalyst over a large area, to thereby carry out an efficient purification of the exhaust gas.

In the honeycomb unit used for such an application, the honeycomb unit is used in a state in which the inner surface of the outer mantle and the outer surface of the honeycomb body are joined together.

Here, for example, in the case in which the inner surface of the outer mantle and the outer surface of the honeycomb body are joined together over an entire axial direction, the honeycomb body expands in the axial direction when receiving heat of the exhaust gas, and stress is likely to be concentrated on the joint part, to cause damages thereto. Consequently, durability of the honeycomb unit is deteriorated.

Since heat is generated due to interaction between air pollutants or the like in the exhaust gas and the catalyst, the temperature becomes higher as it goes closer to the end surface of the inlet of the honeycomb unit. Hence, for example, when the inner surface of the outer mantle and the outer surface of the honeycomb body are joined together in the vicinity of the inlet in the axial direction of the honeycomb unit, the heat of interaction between the air pollutants or the like in the exhaust gas and the catalyst reduces the joint strength to cause damages, resulting in deterioration of the durability of the honeycomb unit.

For this reason, in a general honeycomb unit, the joint position between an outer mantle and a honeycomb body is set at the center or on the outlet side in the axial direction of the honeycomb unit. By setting the joint position at the center or on the outlet side, the honeycomb body can be extended toward the inlet side in the axial direction when the honeycomb body is thermally expanded. Accordingly, it is possible to reduce thermal stress applied on the joint part, to thereby enhance durability of the honeycomb unit.

EP 0 658 390 A1 discloses an exhaust gas cleaning metal carrier and method of manufacturing the same.

DE 102 50 894 A1 discloses a metal honeycomb body for use as support for catalysts and/or adsorbents in exhaust systems of internal combustion engines comprising metal sheets with defined system of holes.

### Citation List

### Patent Literature

Patent Literature 1: Japanese Patent No. 6069538

### Summary of Invention

### Technical Problem

However, according to the above configuration, the thermal expansion of the honeycomb body causes the catalyst coating in the honeycomb body to easily drop off, resulting in deterioration of the purification performance.

To cope with this, an object of the present invention is to reduce early damages on a joint part between an outer mantle and a honeycomb body, while preventing a catalyst coating in the honeycomb body from dropping off.

### Solution to problem

To cope with the above problems, the present invention is defined in the appended independent claims. Further aspects and preferred embodiments are defined in the dependent claims. Any aspects, embodiments and examples of the present disclosure which do not fall under the scope of the appended claims do not form part of the invention and are merely provided for illustrative purposes.

### Advantageous Effects of Invention

The honeycomb unit according to the present invention, it is possible to reduce early damages on the joint part between the outer mantle and the honeycomb body, and also to prevent the catalyst carried on the honeycomb body from dropping off.

### Brief Description of Drawings

[Figure 1] Figure 1 shows a view of a honeycomb unit in the present embodiments, as viewed from the axial direction.
[Figure 2] Figure 2 is an arrow view taken along line A-A of Figure 1.
[Figure 3] Figure 3 is an enlarged view of a region B surrounded by a two-dot chain line in Figure 2.
[Figure 4] Figure 4 is an enlarged development view of a flat foil 40 included in a honeycomb body 10.
[Figure 5] Figure 5 is an enlarged sectional view of a region C surrounded by a broken line in Figure 1, the region C cut in the radial direction so as to pass through a first through-hole 72a.
[Figure 6] Figure 6 is an enlarged sectional view of a region D surrounded by a broken line in Figure 1, the region D cut in the radial direction so as to pass through a second through-hole 72b.
[Figure 7] Figure 7 is a flowchart showing a production method of producing the honeycomb unit 1.

### Description of Embodiments

### (First embodiment)

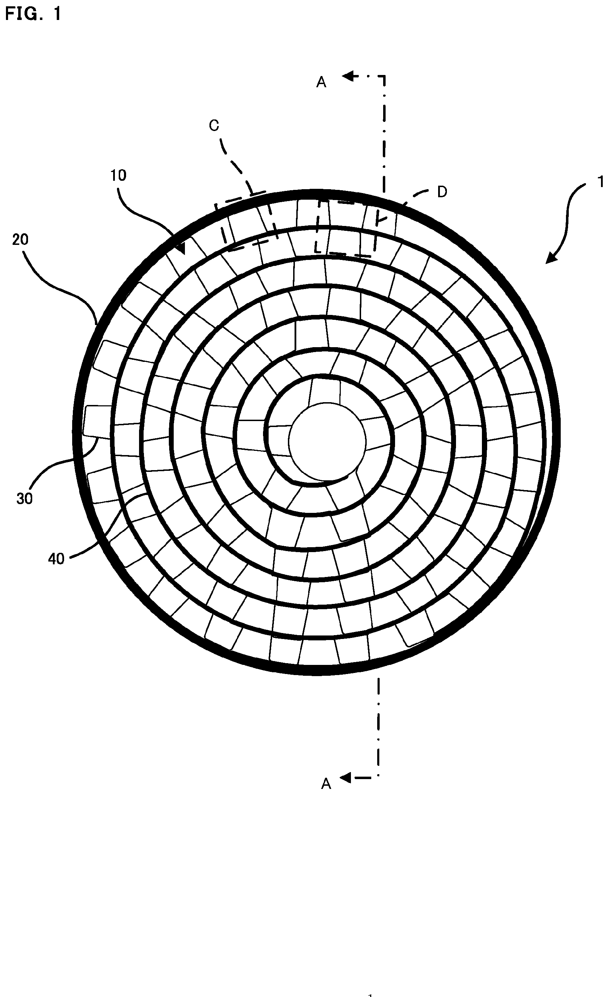

Hereinafter, the first embodiment according to the present invention will be described with reference to the drawings. Figure 1 is a view of a honeycomb unit in the present embodiment, as viewed from the axial direction. With reference to Figure 1, the honeycomb unit 1 includes a honeycomb body 10 and an outer mantle 20. The outer mantle 20 is formed in a cylindrical shape, and is arranged at a position where the outer surface in the radial direction of the honeycomb body 10 is surrounded. A heat-resistant alloy can be used for honeycomb unit 1. As the heat-resistant alloy, a heat-resistant alloy containing Cr of 15 to 25% by mass and Al of 2 to 8% by mass can be used. For example, an Fe-20Cr-5Al alloy, an Fe-18Cr-3Al alloy, an Fe-20Cr-8Al alloy, and the like can be used. The honeycomb unit 1 can be installed, for example, in an exhaust gas passage of a vehicle. The vehicle includes a two-wheeled vehicle, a four-wheeled vehicle, and an off-road vehicle.

The honeycomb body 10 is configured by winding a corrugated foil 30 and a flat foil 40 together around the axial direction in a stack state, the flat foil 40 having a brazing material placed in a band shape thereon; and the corrugated foil 30 and the flat foil 40 are alternately stacked in the radial direction. According to the above configuration, a large number of gas flow channels axially extending can be formed inside the honeycomb body 10. The honeycomb body 10 is inserted into the outer mantle 20 and is heated in vacuum so as to join the honeycomb body 10 and the outer mantle 20 together via the brazing material (to form outer mantle-honeycomb body joint parts 50 described later), and also to join the corrugated foil 30 and the flat foil 40 together (to form flat foil-corrugated foil joint parts 60 described later), to thereby produce the honeycomb unit 1. A brazing material of a foil shape can be used for the brazing material; and for example, a nickel-based brazing material such as BNi-2 or BNi-5 can be used. Note that a powdery or granular brazing material, which is different from a brazing material of a foil shape, can also be used.

The corrugated foil 30 and the flat foil 40 are coated with a catalyst (not shown). The catalyst can be applied thereon by supplying a wash coat slurry (a solution containing γ-alumina and additives, and noble metal catalysts) into the gas flow channels of the honeycomb body 10, and by baking this by heat treatment.

When exhaust gas flowing into the gas flow channels of the honeycomb body 10 comes into contact with the catalyst, CO, hydrocarbons, and NOx contained in the exhaust gas are detoxified, so that a clean gas can be discharged to the outside of the vehicle.

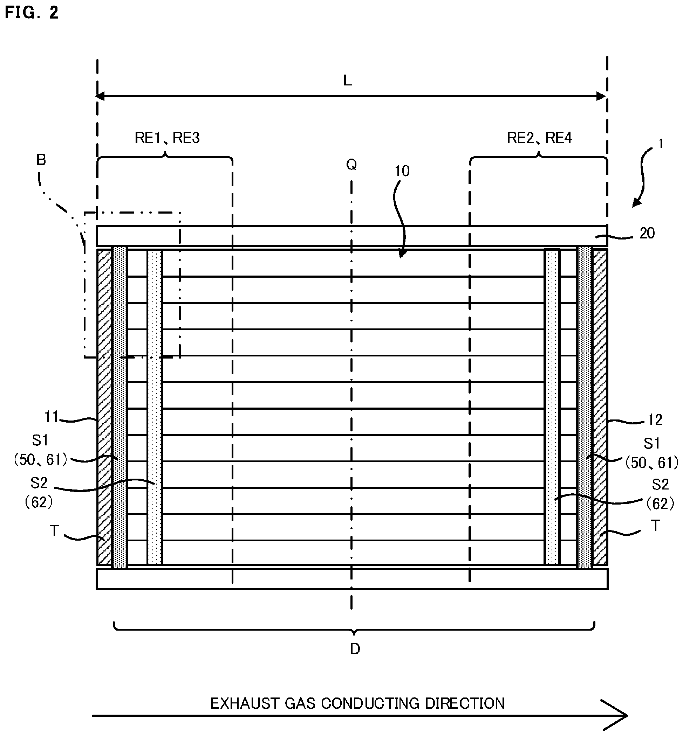

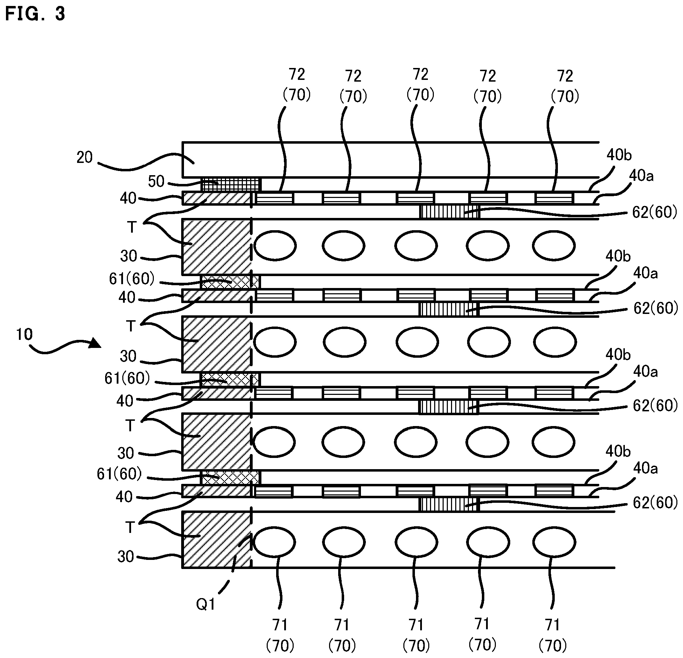

Figure 2 is an arrow view taken along line A-A of Figure 1. Figure 3 is an enlarged view of a region B surrounded by a two-dot chain line in Figure 2. With reference to Figures 2 and 3, the honeycomb unit 1 is formed with joint parts ( outer mantle-honeycomb body joint parts 50) between the outer mantle 20 and the honeycomb body 10, and joint parts (flat foil-corrugated foil joint parts 60) between the flat foil 40 and the corrugated foil 30 in the honeycomb body 10. In the present embodiment, the flat foil-corrugated foil joint parts 60 include: a flat foil-corrugated foil first joint part 61 that joins a back surface 40b of the flat foil 40 (in the present embodiment, an outer surface of the flat foil 40 in the radial direction of the honeycomb body 10) and the corrugated foil 30; and a flat foil-corrugated foil second joint part 62 that joins a front surface 40a of the flat foil 40 (in the present embodiment, an inner surface of the flat foil 40 in the radial direction of the honeycomb body 10) and the corrugated foil 30. The outer mantle-honeycomb body joint part 50 and the flat foil-corrugated foil first joint part 61 are formed in regions S1 indicated by fine dots in Figure 2. The flat foil-corrugated foil second joint part 62 is formed in regions S2 indicated by coarse dots in Figure 2. The regions S1 are arranged so as to be farther from a center in the axial direction Q (indicated by an alternate long and short dash line) of the honeycomb body 10 than the regions S2 are.

The outer mantle-honeycomb body joint part 50 is formed in both a first region RE1 and a second region RE2. The flat foil-corrugated foil joint part 60 is formed in both a third region RE3 and a fourth region RE4. Note that if the length in the axial direction of the honeycomb body 10 is represented by L, each of the first region RE1 and the third region RE3 corresponds to a region of 0.33L in the axial direction from a gas inlet end 11 in the axial direction of the honeycomb body 10. Further, each of the second region RE2 and the fourth region RE4 corresponds to a region of 0.33L in the axial direction from a gas outlet end 12 in the axial direction of the honeycomb body 10.

By forming the outer mantle-honeycomb body joint part 50 in both the first region RE1 on the gas inlet side and the second region RE2 on the gas outlet side, the thermal expansion of the honeycomb body 10 in the axial direction is reduced; therefore, it is possible to prevent the catalyst coating in the honeycomb body 10 from dropping off. Hence, it is necessary to form the outer mantle-honeycomb body joint part 50 in both the first region RE1 and the second region RE2.

In the case in which the flat foil-corrugated foil joint part 60 is formed in both the third region RE3 and the fourth region RE4, the thermal expansion of the honeycomb body 10 in the axial direction is reduced; therefore, it is possible to prevent the catalyst coating in the honeycomb body 10 from dropping off. Hence, it is necessary to form the flat foil-corrugated foil joint part 60 in both the third region RE3 and the fourth region RE4.

Here, in the case in which the outer mantle-honeycomb body joint part 50 is formed in both the first region RE1 and the second region RE2, thermal stress is concentrated on the outer mantle-honeycomb body joint part 50 when the honeycomb body 10 thermally expands in the axial direction, so that the outer mantle-honeycomb body joint part 50 may be damaged. To cope with this, the corrugated foil 30 and the flat foil 40 are respectively provided with a plurality of through-holes 71, 72 penetrating therethrough in the thickness direction. Note that when the through-holes 71 of the corrugated foil 30 and the through-holes 72 of the flat foil 40 are not particularly distinguished, they are referred to as through-holes 70.

By forming the through-holes 70 in the honeycomb body 10, it is possible to enjoy an effect of forming the outer mantle-honeycomb body joint part 50 in both the first region RE1 and the second region RE2 (preventing the catalyst carried in the honeycomb body 10 from dropping off), and at the same time, it is possible to reduce the thermal expansion of the honeycomb body 10 in the axial direction, to thereby reduce the thermal stress generated at the outer mantle-honeycomb body joint part 50. Accordingly, damage on the outer mantle-honeycomb body joint part 50 can be suppressed. This effect is obtained when a diameter of each through-hole 70 is set to 8 mm or less. Since each through-hole 70 is circular, an aperture area of each through-hole 70 is 50.3 mm². When the aperture area of each through-hole 70 is 50.3 mm² or less, the same effect can be obtained even if this shape is other than a circle (for example, ellipse, etc.). The lower limit of the aperture area of each through-hole 70 is not particularly limited; however, for example, the aperture area of each through-hole 70 can be set to 0.031 mm² or more. Hence, when the shape of each through-hole 70 is a circle, the diameter of each through-hole 70 can be set to 0.2 mm or more.

The through-holes 70 are formed in a hole formation region D located between end regions T of the honeycomb body. If L is 50 mm or more, each of the end regions T has a width of 15 mm or less in the axial direction from each of the ends 11, 12 in the axial direction of the honeycomb body 10. If each of the end regions T is set to more than 15 mm in the axial direction from each end of the honeycomb body 10, each end region T becomes excessively wide, and the effect of reducing the thermal expansion of the honeycomb body 10 in the axial direction by the through-holes 70 is deteriorated. If L is less than 50 mm, each end region T has a width of (0.5L-10) mm or less in the axial direction from each end in the axial direction of the honeycomb body 10. If each end region T is set to more than (0.5L-10) mm in the axial direction from each end of the honeycomb body 10, the end region T becomes excessively wide, so that the effect of reducing the thermal expansion of the honeycomb body 10 in the axial direction by the through-holes 70 is deteriorated. In the present specification, there is defined a boundary line Q1 extending in a direction parallel to the center in the axial direction Q, the boundary line Q1 extending through outer edges of those through-holes 70 that are formed at positions closest to each end in the axial direction of the honeycomb body 10 (outer edges closest to each end in the axial direction); and a region located closer to the center in the axial direction Q than these boundary lines Q1 is defined as the hole formation region D; and regions located closer to both ends in the axial direction than the boundary lines Q1 are defined as the end regions T. The lower limit of the width of each end region T is not particularly specified; however, each end region preferably has a width of 1 mm in the axial direction.

In the hole formation region D, when the ratio of a total aperture area of all the through-holes 70 is represented by S(%), S satisfies a conditional expression of 20(%) ≤ S ≤ 70(%). If S is less than 20%, the thermal expansion of the honeycomb body 10 in the axial direction cannot be sufficiently reduced, so that stress is concentrated on the outer mantle-honeycomb body joint part 50; thus, the outer mantle-honeycomb body joint part 50 may be damaged. When S is more than 70%, the aperture ratio of the through-holes 70 becomes excessive, so that the strength of the honeycomb body 10 is deteriorated.

The aperture area of each through-hole 70 is preferably set to 12.6 mm² or less. Hence, when the shape of the through-hole 70 is a circle, it is preferable to set the diameter of each through-hole 70 to 4 mm or less. By setting the aperture area of each through-hole 70 to 12.6 mm² or less, the distribution of through-holes 70 in the hole formation region D becomes more uniform; thus, the thermal stress can be reduced more uniformly in the honeycomb body 10, which results in further enhancement of the durability of the honeycomb body 10.

More preferably, the aperture area of each through-hole 70 is set to 0.79 mm² or less. Hence, when the shape of the through-hole 70 is a circle, it is more preferable to set the diameter of each through-hole 70 to 1 mm or less. By setting the aperture area of each through-hole 70 to 0.79 mm² or less, the distribution of the through-holes 70 in the hole formation region D becomes even more uniform; thus, the thermal stress can be reduced more uniformly in the honeycomb body 10, so that the durability of the honeycomb body 10 is further enhanced. In addition, since the number of portions where an intrusion effect (described later) appears is increased, the number of joint portions between the flat foil 40 and the corrugated foil 30 can be increased, and thus, it is possible to further reduce the thermal expansion of the honeycomb body 10 in the axial direction.

An aperture ratio S preferably satisfies a conditional expression of 25(%) ≤ S ≤ 60(%). According to this configuration, by setting 25(%) ≤ S, the thermal stress can be further reduced in the honeycomb body 10, and the durability of the honeycomb body 10 is further enhanced. Furthermore, by setting S ≤ 60(%), the durability of the foils provided with the through-holes 70 is enhanced.

More preferably, the aperture ratio S satisfies a conditional expression of 30(%) ≤ S ≤ 50(%). According to this configuration, the thermal stress can be further reduced in the honeycomb body 10; thus, the durability of the honeycomb body 10 is further enhanced. In addition, the intrusion effect (described later) appears more sufficiently, and thus the durability of the honeycomb body 10 is further enhanced.

As aforementioned, the flat foil-corrugated foil joint parts 60 include: the flat foil-corrugated foil first joint part 61 that joins the back surface 40b of the flat foil 40 and the corrugated foil 30 together; and the flat foil-corrugated foil second joint part 62 that joins the front surface 40a of the flat foil 40 and the corrugated foil 30 together. In addition, the flat foil-corrugated foil first joint part 61 and the flat foil-corrugated foil second joint part 62 are provided at positions so as not to overlap each other in the axial direction. According to these configurations, it is possible to further reduce the thermal stress in the radial direction on the honeycomb body 10, as compared with the case where the flat foil-corrugated foil first joint part 61 and the flat foil-corrugated foil second joint part 62 are formed at positions so as to overlap each other in the axial direction. Accordingly, it is possible to further enhance the durability of the honeycomb body 10.

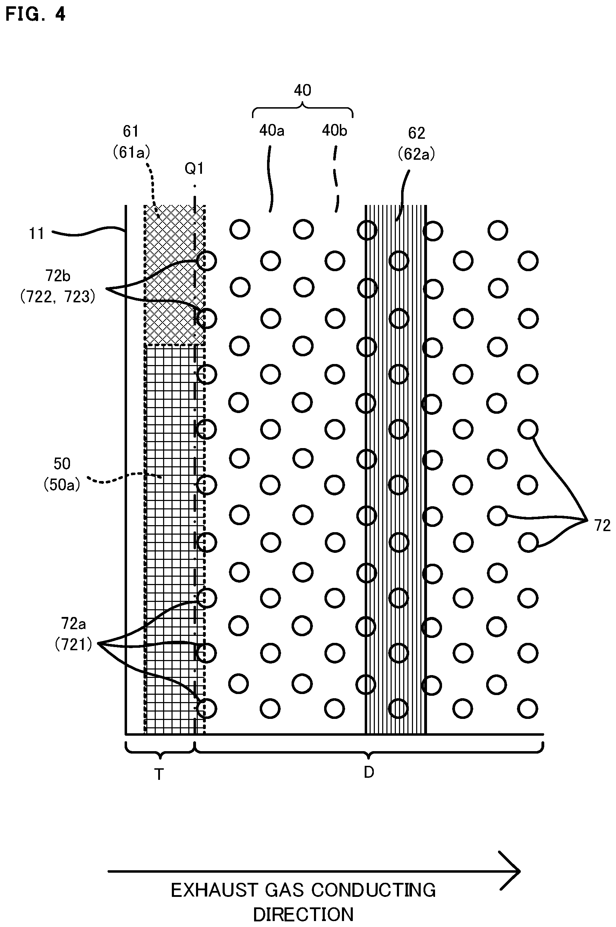

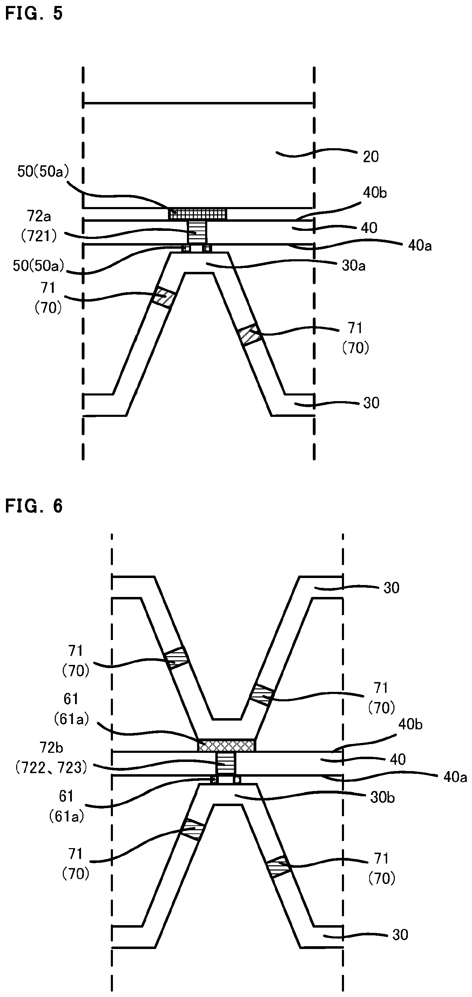

Figure 4 is an enlarged development view of the flat foil 40 included in the honeycomb body 10. The outer mantle-honeycomb body joint part 50 spreads in the axial direction, and is formed across each end region T in the flat foil 40 and the hole formation region D in the flat foil 40. Among the through-holes 72 formed in the flat foil 40, through-holes that overlap the outer mantle-honeycomb body joint part 50 are referred to as first through-holes 72a. Figure 5 is an enlarged cross sectional view of the region C surrounded by a broken line in Figure 1, the region C cut in the radial direction so as to pass through the first through-holes 72a. Among ridges of the corrugated foil 30, ridges that face the first through-holes 72a of the honeycomb body 10 in the radial direction are referred to as first ridges 30a.

With reference to Figures 4, 5, the outer mantle-honeycomb body joint part 50 spreads between the first through-holes 72a and the first ridges 30a via the first through-holes 72a. According to this configuration, the outer mantle-honeycomb body joint part 50 spreads from the back surface 40b to the front surface 40a of the flat foil 40 via the first through-holes 72a (intrusion effect) so as to join the flat foil 40 and the first ridges 30a together. Accordingly, the number of joint portions between the flat foil 40 and the corrugated foil 30 can be increased, and thus the thermal expansion of the honeycomb body 10 in the axial direction can be further reduced.

With reference to Figure 4, the flat foil-corrugated foil first joint part 61 spreads in the axial direction, and is formed across each end region T in the flat foil 40 and the hole formation region D in the flat foil 40. Among the through-holes 72 formed in the flat foil 40, through-holes that overlap the flat foil-corrugated foil first joint part 61 are referred to as second through-holes 72b. Figure 6 is an enlarged cross sectional view of the region D surrounded by a broken line in Figure 1, the region D cut in the radial direction so as to pass through the second through-holes 72b. Among ridges of the corrugated foil 30, ridges that face the second through-holes 72b in the radial direction of the honeycomb body 10 are referred to as second ridges 30b.

With reference to Figures 4, 6, the flat foil-corrugated foil first joint part 61 spreads between the second through-holes 72b and the second ridges 30b via the second through-holes 72b. According to this configuration, the flat foil-corrugated foil first joint part 61 spreads from the back surface 40b to the front surface 40a of the flat foil 40 via the second through-holes 72b (intrusion effect) so as to join the flat foil 40 and the second ridges 30b together. Accordingly, the number of joint portions between the flat foil 40 and the corrugated foil 30 can be increased, and thus the thermal expansion of the honeycomb body 10 in the axial direction can be further reduced.

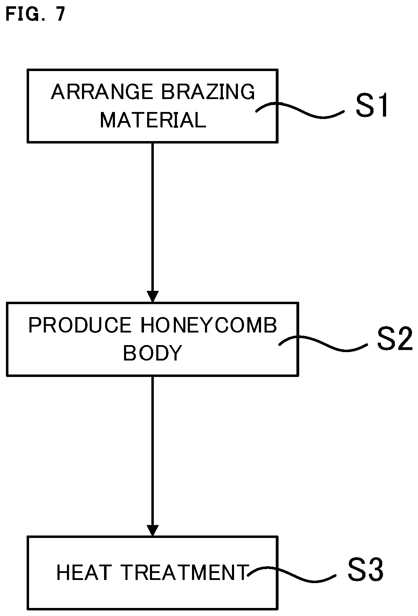

The method of producing the honeycomb unit 1 in the present embodiment will be described with reference to Figures 4 to 7. Figure 7 is a flowchart showing the production method of producing the honeycomb unit 1. In step S1, the brazing material is placed on the flat foil 40. On the front surface 40a of the flat foil 40, a brazing material 62a for forming the flat foil-corrugated foil second joint part 62 is placed. On the back surface 40b of the flat foil 40, a brazing material 50a for forming the outer mantle-honeycomb body joint part 50 and a brazing material 61a for forming the flat foil-corrugated foil first joint part 61 are placed at a position closer to the end in the axial direction of the honeycomb body 10 than the brazing material 62a is. In the present embodiment, the brazing material 50a and the brazing material 61a are placed so as to be continuous in the circumferential direction of the honeycomb body 10, at the same position in the axial direction. The brazing materials 50a, 61a are placed across each end region T in the flat foil 40 and the hole formation region D in the flat foil 40, and at a position so as to overlap at least one through-hole of the through-holes 72 formed in the flat foil 40. Among the through-holes 72 formed in the flat foil 40, through-holes that overlap the brazing material 50a are referred to as first overlapping through-holes 721. Further, among the through-holes 72 formed in the flat foil 40, through-hole that overlap the brazing material 61a placed on the flat foil 40 are referred to as second overlapping through-holes 722. The first overlapping through-holes 721 correspond to the first through-holes 72a. The second overlapping through-holes 722 correspond to the second through-holes 72b.

In step S2, the corrugated foil 30 and the flat foil 40 are arranged to overlap each other, and are wound together around a predetermined axial direction, to thereby produce the honeycomb body 10. In step S3, the honeycomb body 10 is inserted into the outer mantle 20, and is heated in vacuum. The heating temperature can be set at approximately 1000°C, for example. By the heating in step S3, the brazing material 50a is melted and spreads from the back surface 40b to the front surface 40a of the flat foil 40 via the first overlapping through-holes 721. Further, by the heating in step S3, the brazing material 61a is melted and spreads from the back surface 40b to the front surface 40a of the flat foil 40 via the second overlapping through-holes 722.

The brazing material 50a spreads between the first overlapping through-holes 721 and those ridges among the ridges of the corrugated foil 30, those ridges facing the first overlapping through-holes 721 in the radial direction of the honeycomb body 10 (corresponding to the first ridges 30a). Thereafter, the brazing material 50a solidifies, to thereby form the outer mantle-honeycomb body joint part 50; therefore, the honeycomb body 10 and the outer mantle 20 are joined together, and the flat foil 40 and the first ridges 30a are also joined together by the outer mantle-honeycomb body joint part 50 spreading via the first overlapping through-holes 721 (first through-holes 72a). The brazing material 61a spreads between the second overlapping through-holes 722 and those ridges among the ridges of the corrugated foil 30, those ridges facing the second overlapping through-holes 722 in the radial direction of the honeycomb body 10 (corresponding to the second ridges 30b). Subsequently, the brazing material 61a solidifies, to thereby form the flat foil-corrugated foil first joint part 61; therefore, the corrugated foil 30 and the flat foil 40 are joined together; and the flat foil 40 and the second ridges 30b are joined together by the flat foil-corrugated foil first joint part 61 spreading via the second overlapping through-holes 722 (second through-holes 72b). In this manner, the honeycomb unit 1 is produced.

Here, in the front surface 40a of the flat foil 40, by forming another flat foil-corrugated foil joint part at positions axially corresponding to the outer mantle-honeycomb body joint part 50 and the flat foil-corrugated foil first joint part 61, it is possible to increase the number of joint portions between the flat foil 40 and the corrugated foil 30. However, in this method, the flat foil 40 and the corrugated foil 30 are joined together also at ridges facing through-holes such as the first through-holes 72a, other than the first ridges 30a and the second ridges 30b. Hence, the number of joint portions between the flat foil 40 and the corrugated foil 30 becomes excessive. Consequently, the effect which is caused by forming the flat foil-corrugated foil first joint part 61 and the flat foil-corrugated foil second joint part 62 at the positions so as not to overlap each other in the axial direction (the effect of reducing the thermal stress in the radial direction of the honeycomb body 10) is deteriorated.

On the other hand, in the configuration in which the outer mantle-honeycomb body joint part 50 spreads between the first through-holes 72a and the first ridges 30a via the first through-holes 72a, the first ridges 30a joined to the flat foil 40 correspond to only those ridges among the plurality of ridges of the corrugated foil 30, those ridges facing the first through-holes 72a in the radial direction of the honeycomb body 10. In the configuration in which the flat foil-corrugated foil first joint part 61 spreads between the second through-holes 72b and the second ridges 30b via the second through-holes 72b, the second ridges 30b joined to the flat foil 40 correspond to only those ridges among the plurality of ridges of the corrugated foil 30, those ridges facing the second through-holes 72b in the radial direction of the honeycomb body 10. Hence, the number of joint portions between the flat foil 40 and the corrugated foil 30 does not become excessive. Accordingly, it is possible to enjoy the effect which is caused by forming the flat foil-corrugated foil first joint part 61 and the flat foil-corrugated foil second joint part 62 at the positions so as not to overlap each other in the axial direction (the effect of reducing the thermal stress in the radial direction of the honeycomb body 10), and at the same time, it is possible to further reduce the thermal expansion of the honeycomb body 10 in the axial direction.

It is preferable that each of the brazing materials 50a, 61a, 62a used for forming the outer mantle-honeycomb body joint part 50 and the flat foil-corrugated foil joint part 60 is set to have a thickness in the radial direction of the honeycomb body 10 of 0.1 mm or less. According to this configuration, compared with the case in which each of the outer mantle-honeycomb body joint part 50 and the flat foil-corrugated foil joint part 60 is set to have a thickness of more than 0.1 mm, it is possible to further reduce deterioration in the joint strengths of the outer mantle-honeycomb body joint part 50 and the flat foil-corrugated foil joint part 60.

More preferably, each thickness in the radial direction of the honeycomb body 10 of the materials (the brazing materials in the present embodiment) used for forming the outer mantle-honeycomb body joint part 50 and the flat foil-corrugated foil joint part 60 is set to 0.01 mm or more and 0.05 mm or less. If each thickness of the brazing materials is set to less than 0.01 mm, (1) the joint areas of the outer mantle-honeycomb body joint part 50 and the flat foil-corrugated foil joint part 60 are reduced, which may reduce the strength of the honeycomb unit 1 and the honeycomb body 10; and (2) the aforementioned intrusion effect is deteriorated. If the thickness of each brazing material is set to more than 0.05mm, (1) the usage amount of the brazing materials becomes increased, resulting in increase in cost; and (2) when the brazing materials are melted by heat treatment, gaps may be produced between the corrugated foil 30 and the flat foil 40, resulting in deterioration of the strength of the honeycomb body 10.

With reference to Figure 2 again, in the present embodiment, the regions S1, where the outer mantle-honeycomb body joint part 50 and the flat foil-corrugated foil first joint part 61 are formed, are provided at symmetrical positions in the axial direction with a symmetry plane radially extending through the center in the axial direction Q of the honeycomb body interposed therebetween. The regions S2, where the flat foil-corrugated foil second joint part 62 is formed, are provided at symmetrical positions in the axial direction with a symmetry plane radially extending through the center in the axial direction Q of the honeycomb body interposed therebetween.

In other words, the outer mantle-honeycomb body joint part 50 formed in the first region RE1 and the outer mantle-honeycomb body joint part 50 formed in the second region RE2 are provided at symmetrical positions in the axial direction with a symmetry plane radially extending through the center in the axial direction Q of the honeycomb body 10 interposed therebetween. The flat foil-corrugated foil joint part 60 formed in the third region RE3 and the flat foil-corrugated foil joint part 60 formed in the fourth region RE4 are provided at symmetrical positions in the axial direction with a symmetry plane radially extending through the center in the axial direction Q of the honeycomb body 10 interposed therebetween. According to these configurations, it is unnecessary to change the formation positions, where the outer mantle-honeycomb body joint parts 50 and the flat foil-corrugated foil joint parts 60 are formed, on the gas inlet side and on the gas outlet side; therefore, the production of the honeycomb unit 1 can be further facilitated. In addition, even if the gas inlet side and gas outlet side are reversed in the honeycomb unit, the honeycomb unit can be used with the same performance, which eliminates consideration of the orientations of the gas inlet side and the gas outlet side when the honeycomb unit 1 is installed in the exhaust gas passage, for example; therefore, the installation work can be facilitated.

It is preferable that the through-holes 70 formed in the corrugated foil 30 and the flat foil 40 are arranged in a zigzag pattern along the axial direction. According to this configuration, the through-holes 70 can be uniformly arranged in the corrugated foil 30 and the flat foil 40. Compared with a configuration in which the through-holes 70 are arranged so as to be aligned in the axial direction and in the circumferential direction of the honeycomb body 10, the distance between the through-holes 70 can be increased, to thereby enhance the strengths of the corrugated foil 30 and the flat foil 40. Note that the formation of the through-holes 70 in the corrugated foil 30 and the flat foil 40 is not limited to a zigzag pattern along the axial direction.

### (Embodiment examples)

Hereinafter, the present invention will be described in more detail with reference to Embodiment examples. In the following Embodiment examples, various parameters in the honeycomb unit are changed to evaluate the durability and the purification performance of the honeycomb unit. First, two flat plates made of Fe-20Cr-5Al stainless steel having the same thickness were formed with through-holes, each having a predetermined aperture area and a predetermined shape (corresponding to the through-holes 70 in the above-described embodiment), at a predetermined total aperture area ratio (corresponding to S(%) in the above-described embodiment). An Ni-based brazing material (BNi-5) was placed on one of the flat plates (corresponding to the flat foil 40 in the above-described embodiment). This flat plate was so arranged as to overlap a corrugated plate formed by processing the other flat plate into a corrugated shape (corresponding to the corrugated foil 30 in the above-described embodiment), and then wrapped around together, to thereby produce a honeycomb body. This honeycomb body was inserted into an outer mantle made of stainless steel, and joined thereto via the brazing material by heat treatment in vacuum, to thereby produce a honeycomb unit. The outer diameter, the axial length and the thickness of the outer mantle were appropriately set according to the diameter and the axial length, etc., of the honeycomb body. The outer mantle-honeycomb body joint parts and the flat foil-corrugated foil joint parts that were formed in the above-produced honeycomb unit were axially symmetric with respect to the symmetry plane radially extending through the center in the axial direction of the honeycomb body. The brazing material for forming the flat foil-corrugated foil joint parts was placed such that the width thereof was set to 3 mm (excluding Embodiment examples 55 to 57 and Comparative example 19).

A wash coat layer containing ceria-zirconia-alumina as a main component was formed in the honeycomb unit. After the whole honeycomb body was subjected to a wash coat slurry to remove an excess wash coat slurry therefrom, the honeycomb body was dried at 180°C for 1 hour, then baked at 500°C for 2 hours, to thereby coat the wash coat layer in the honeycomb body at a ratio of 180 g/L per honeycomb unit volume. The honeycomb body formed with this wash coat layer was immersed in distilled water to sufficiently absorb water; and thereafter, the honeycomb body was pull up and blown to remove excessive water therefrom, and then was immersed in a solution containing palladium. Then, this honeycomb body was taken out and dried, to thereby apply 4 g/L of palladium per honeycomb unit volume thereon.

### (Evaluation of durability of honeycomb unit)

The durability of the honeycomb unit was evaluated by a heating/cooling cycle test using a burner test device (not shown). The honeycomb unit was set in the burner test device, and the number of cooling/heating cycles until a phenomenon that the honeycomb body dropped off from the outer mantle (core displacement, etc.) occurred was studied. On the gas inlet side by a burner, an exhaust pipe and the outer mantle were welded via a cone (not shown). On the gas outlet side, an exhaust pipe and the outer mantle were also welded via a cone. As a heating/cooling cycle pattern, there was adopted a temperature pattern in which the temperature of an incoming gas entering the honeycomb unit was repeated between 1000°C and 100°C. In one cycle, the incoming gas reached 1000°C in 10 seconds, and was held for 1 minute, and then cooled down to 100°C in 30 seconds. An observation was continued up to 2000 cycles, and evaluation of whether or not the honeycomb body dropped off from the outer mantle was performed. As a result, if the honeycomb body did not drop off until 2000 cycles, the evaluation was set to "A"; and if the honeycomb body dropped off at 1500 cycles or more and 2000 cycles or less, the evaluation was set to "B". The evaluation was set to "C" if the honeycomb body dropped off at 1000 cycles or more and less than 1500 cycles; and the evaluation was set to "F" if the honeycomb body dropped off at less than 1000 cycles.

### (Evaluation of purification performance of honeycomb unit)

The purification performance of the honeycomb unit was evaluated based on the degree of drop-off of the catalyst coating in the honeycomb body. Specifically, the weight of the catalyst carried in the honeycomb body was measured in advance before the above-mentioned durability test. For every honeycomb unit having passed the 1000-cycle durability test, the weight of the catalyst having dropped off was measured. The ratio (weight%) of the weight of the catalyst having dropped off in the durability test to the weight of the catalyst coating in the honeycomb body before the durability test was evaluated. As a result, if the drop-off of the catalyst was less than 2 weight%, the evaluation was set to "B"; if the drop-off of the catalyst was 2 weight% or more and less than 5 weight%, the evaluation was set to "C"; and if the drop-off of the catalyst was 5 weight% or more, the evaluation was set to "F". Those honeycomb units that have not passed the 1000-cycle durability test was evaluated as "-".

Tables 1 to 4 show parameters, evaluation results of the durability, and evaluation results of the purification performance of each honeycomb unit used in Embodiment examples.

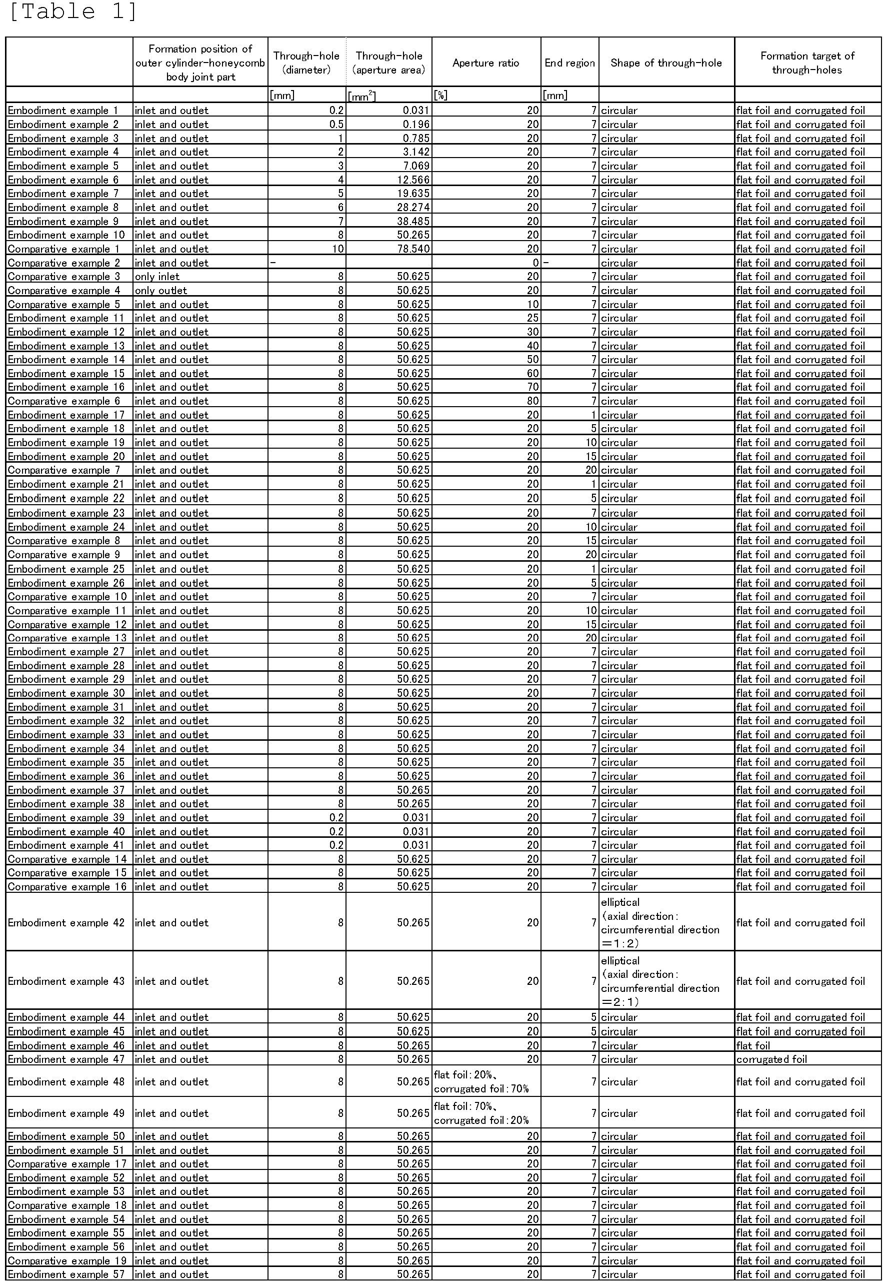

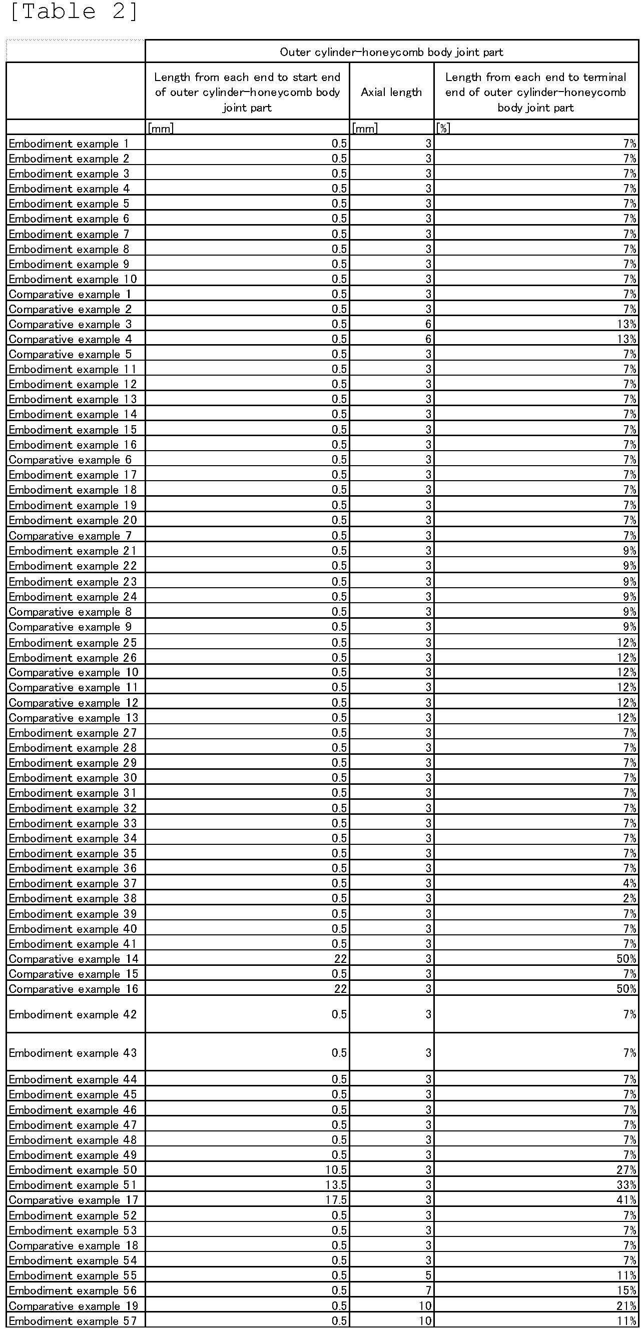

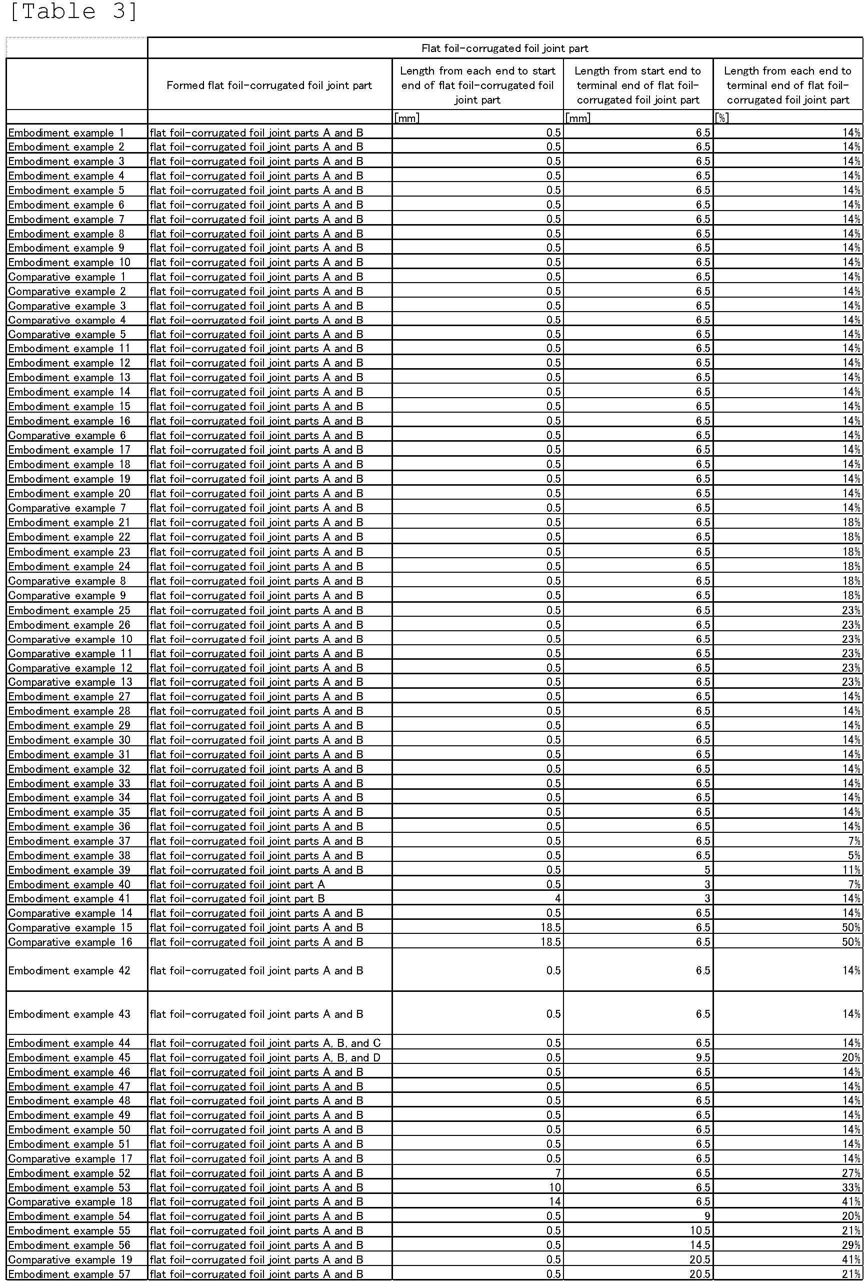

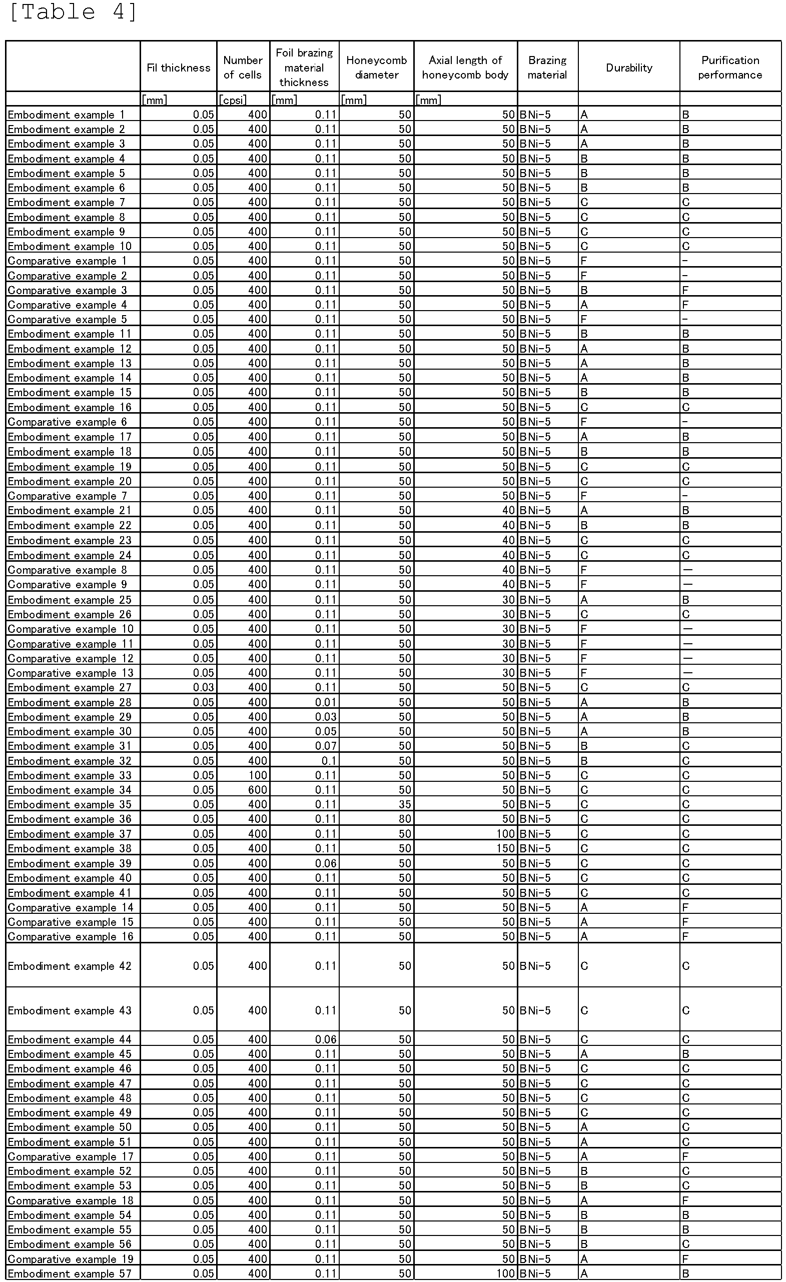

"Start end of outer mantle-honeycomb body joint part" in Table 2 refers to an end of both ends of the outer mantle-honeycomb body joint part in the axial direction, the end being located at a position farther from the center in the axial direction of the honeycomb body.

In Embodiment examples 1 to 57 and Comparative examples 1 to 19, the flat foil-corrugated foil joint parts include: a flat foil-corrugated foil joint part A (corresponding to the flat foil-corrugated foil first joint part 61 in the above-described embodiment); and a flat foil-corrugated foil joint part B (corresponding to the flat foil-corrugated foil second joint part 62 in the above-described embodiment) located at a position closer to the center in the axial direction of the honeycomb body than the flat foil-corrugated foil joint part A was. A flat foil-corrugated foil joint part C in Embodiment example 44 is formed at a position so as to face the flat foil-corrugated foil joint part B with the flat foil interposed therebetween. A flat foil-corrugated foil joint part D in Embodiment example 45 is formed on the same surface of the flat foil as that of the flat foil-corrugated foil joint part A, and extends in a direction toward the center in the axial direction of the honeycomb body from the same position in the axial direction as that of an end of both ends in the axial direction of the flat foil-corrugated foil joint part B, the end being located at a position closer to the center in the axial direction of the honeycomb body. In Embodiment examples 1 to 57 and Comparative example 1 to 19, "start end of flat foil-corrugated foil joint part " in Table 3 refers to an end of both ends in the axial direction of the flat foil-corrugated foil joint part A, the end being located at a position farther from the center in the axial direction of each honeycomb body. In Embodiment examples 1 to 44, 46 to 57, and Comparative examples 1 to 19, "terminal end of flat foil-corrugated foil joint part" in Table 3 refers to an end of both ends in the axial direction of the flat foil-corrugated foil joint part B, the end being located at a position closer to the center in the axial direction of the honeycomb body. In Embodiment example 45, "terminal end of flat foil-corrugated foil joint part" in Table 3 refers to an end of both ends in the axial direction of the flat foil-corrugated foil joint part D, the end being located at a position closer to the center in the axial direction of the honeycomb body. In Embodiment examples 1 to 39, 42 to 57, and Comparative examples 1 to 19, "length from start end to terminal end of flat foil-corrugated foil joint part" in Table 3 includes gaps in the axial direction between the flat foil-corrugated foil joint part A and the flat foil-corrugated foil joint part B. "Length from each end to terminal end of outer mantle-honeycomb body joint part" and "length from each end to terminal end of flat foil-corrugated foil joint part" in Tables 2 and 3 are each expressed in a ratio (%) when the length L of the honeycomb body is 100%.

In Embodiment examples 1 to 47, 50 to 57 and Comparative examples 1 to 19, the aperture ratio (%) of each through-hole in the flat foil and the aperture ratio (%) of each through-hole in the corrugated foil were set to be the same.

In Embodiment examples 1 to 10 and Comparative examples 1, 2, the above evaluation was performed while the respective aperture areas of the through-holes provided in the foils were set to different values. In Comparative example 1, the aperture area of the through-hole was more than 50.3 mm²; therefore, the durability evaluation was "F". In Comparative example 2, since no through-hole was provided, the thermal expansion in the axial direction of the honeycomb body was not sufficiently reduced; consequently, the evaluation of the durability was "F". On the other hand, in Embodiment examples 7 to 10, the aperture area of each through-hole was 50.3 mm² or less; therefore, the evaluations of the durability and the purification performance were "C". In Embodiment examples 4 to 6, the aperture area of each through-hole was 12.6 mm² or less; therefore, the durability and the purification performance were further enhanced, and thus both evaluations were "B". Further, in Embodiment examples 1 to 3, the aperture area of each through-hole was 0.79 mm² or less; therefore, the durability was further enhanced, and thus the evaluation of the durability was "A".

In Comparative example 3, when the length of the outer mantle was represented by L, the outer mantle-honeycomb body joint part was formed only in a region of 0.33L in the axial direction from the gas inlet end in the axial direction of the honeycomb body. In Comparative example 4, the outer mantle-honeycomb body joint part was formed only in a region of 0.33L in the axial direction from the gas outlet end in the axial direction of the honeycomb body. Therefore, in each of Comparative examples 3, 4, the evaluation of the purification performance was "F".

Embodiment examples 11 to 16 and Comparative examples 5, 6 differ from Embodiment example 10 only in the aperture ratio of each through-hole provided in the honeycomb body. In Comparative examples 5, 6, the aperture ratio of each through-hole was not within a range of 20% or more and 70% or less; therefore, the evaluation of the durability was "F". On the other hand, in Embodiment example 16, the aperture ratio of each through-hole was within a range of 20% or more and 70% or less; therefore, the evaluations of the durability and the purification performance were "C". In addition, in Embodiment examples 11, 15, the aperture ratio of each through-hole was within a range of 25% or more and 60% or less; therefore, the durability and the purification performance were further enhanced, and thus both evaluations were "B". Furthermore, in Embodiment examples 12, 13, 14, the aperture ratio of each through-hole was within a range of 30% or more and 50% or less; therefore, the durability was further enhanced, and thus the evaluation of the durability was "A".

Embodiment examples 17 to 20 and Comparative example 7 differ from Embodiment example 10 only in the width of each end region from each end in the axial direction of the honeycomb body. In Comparative example 7, the width of each end region was more than 15 mm from each end in the axial direction of the honeycomb body; thus, the evaluation of the durability was "F". On the other hand, in Embodiment examples 17 to 20, the width of each end region was 15 mm or less from each end in the axial direction of the honeycomb body. Therefore, in Embodiment examples 19, 20, the evaluations of the durability and the purification performance were "C". In addition, in Embodiment example 18, the durability and the purification performance were enhanced, and thus the evaluations of the durability and the purification performance were "B". It can be considered that the flat foil-corrugated foil joint part overlapped some of the through-holes across the end regions and the hole forming region located between the end regions, so that the flat foil-corrugated foil joint part spreading through these through-holes caused some of ridges of the corrugated foil (corresponding to the first ridges 30b in the above-described embodiment) and the flat foil to be joined together, to thereby increase the joint strength. Furthermore, in Embodiment example 17, the durability was further enhanced, and thus the evaluation of the durability was "A". It can be considered that the outer mantle-honeycomb body joint part overlapped some of the through-holes across the end regions and the hole forming region, so that the outer mantle-honeycomb body joint part spreading through these through-holes caused some of the ridges of the corrugated foil (corresponding to the first ridges 30a in the above-described embodiment) and the flat foil to be joined together, to thereby increase the joint strength.

In Embodiment examples 21 to 24 and Comparative examples 8, 9, in the honeycomb body having an axial length of 40 mm, the width of each end region from each end in the axial direction of the honeycomb body was variously changed. In Comparative examples 8, 9, the width of the end region was more than (0.5L-10) mm (more than 10 mm) in the axial direction from each end of the honeycomb body; thus, the evaluation of the durability was "F". On the other hand, in Embodiment examples 21 to 24, the width of each end region was (0.5L-10) mm or less (10 mm or less) in the axial direction from each end of the honeycomb body. Therefore, in Embodiment examples 23, 24, the evaluations of the durability and the purification performance were "C". In Embodiment example 22, the durability and the purification performance were enhanced, and thus the evaluations of the durability and the purification performance were "B". It can be considered that this was due to the same reason as that in Embodiment example 18. Furthermore, in Embodiment example 21, the durability was further enhanced, and thus the evaluation of the durability was "A". It can be considered that this was due to the same reason as that in Embodiment example 17.

In Embodiment examples 25, 26 and Comparative examples 10 to 13, in the honeycomb body having an axial length of 30 mm, the width of each end region from each end in the axial direction of the honeycomb body was variously changed. In Comparative examples 10 to 13, the width of the end region was more than (0.5L-10) mm (more than 5 mm) in the axial direction from each end of the honeycomb body; thus, the evaluation of the durability was "F". On the other hand, in Embodiment examples 25, 26, the width of the end region was (0.5L-10) mm or less (5 mm or less) in the axial direction from each end of the honeycomb body. Therefore, in Embodiment example 26, the evaluations of the durability and the purification performance were "C". In Embodiment example 25, the durability and the purification performance were enhanced; thus, the evaluation of the durability was "A", and the evaluation of the purification performance was "B". It can be considered that this was due to the same reason as those in Embodiment examples 17 and 21.

Embodiment example 27 differs from Embodiment example 10 only in the thicknesses of the flat foil and the corrugated foil. In Embodiment example 27, the evaluations of the durability and the purification performance were "C", as in Embodiment example 10.

In Embodiment examples 28 to 32 differ from Embodiment example 10 only in the thickness of the placed brazing material. In Embodiment example 31, 32, the thickness of the brazing material was set to 0.1 mm or less; thus, the durability was further enhanced, and the evaluation of the durability was "B". In Embodiment examples 28 to 30, the thickness of the brazing material was set to 0.01 mm or more and 0.05 mm or less, and thus the durability and the purification performance were further enhanced; therefore, the evaluation of the durability was "A", and the evaluation of the purification performance was "B".

Embodiment examples 33, 34 differ from Embodiment example 10 only in the number of cells per square inch in the honeycomb body. In Embodiment examples 33, 34, the evaluations of the durability and the purification performance were "C", as in Embodiment example 10.

Embodiment examples 35, 36 differ from Embodiment example 10 only in the diameter of the honeycomb body. In Embodiment examples 35, 36, the evaluation of the durability and the purification performance were "C", as in Embodiment example 10.

In Embodiment examples 37, 38, the axial length of the honeycomb body was set to be longer than that of Embodiment example 10. In Embodiment examples 37, 38, the evaluations of the durability and the purification performance were "C", as in Embodiment example 10.

Embodiment example 39 differs from Embodiment example 1 in that the flat foil-corrugated foil joint part A and the flat foil-corrugated foil joint part B were formed so as to overlap each other (overlap by 1 mm) in the axial direction. Embodiment example 40 differs from Embodiment example 1 in that only the flat foil-corrugated foil joint part A was formed as the flat foil-corrugated foil joint part. Embodiment example 41 differs from Embodiment example 1 in that only the flat foil-corrugated foil joint part B was formed as the flat foil-corrugated foil joint part. Embodiment example 39 had a configuration that, in a region where the flat foil-corrugated foil joint part A and the flat foil-corrugated foil joint part B overlapped each other in the axial direction, the corrugated foil was located between and in contact with the flat foil-corrugated foil joint part A and the flat foil-corrugated foil joint part B. In consideration of this point, in order to obtain the same effect as that in the other Embodiment examples having the thickness of the brazing material of 0.11 mm, in Embodiment example 39, the thickness of the brazing material was set to about half (0.06 mm) of that in the other Embodiment examples. In Embodiment examples 39 to 41, the evaluations of the durability and the purification performance were "C".

In Comparative examples 14 to 16, the position of the outer mantle-honeycomb body joint part and or the position of the flat foil-corrugated foil joint part were changed, as compared with Embodiment example 10. In Comparative example 14, the outer mantle-honeycomb body joint part was formed neither in the region of 0.33L in the axial direction from the gas inlet end in the axial direction of the honeycomb body, nor in the region of 0.33L in the axial direction from the gas outlet end in the axial direction of the honeycomb body; therefore, the evaluation of the purification performance was "F". In Comparative example 15, the flat foil-corrugated foil joint part was formed neither in the region of 0.33L in the axial direction from the gas inlet end in the axial direction of the honeycomb body, nor in the region of 0.33L in the axial direction from the gas outlet end in the axial direction of the honeycomb body; therefore, the evaluation of the purification performance was "F". In Comparative example 16, neither the outer mantle-honeycomb body joint part nor the flat foil-corrugated foil joint part was formed in the region of 0.33L in the axial direction from the gas inlet end in the axial direction of the honeycomb body, and in the region of 0.33L in the axial direction from the gas outlet end in the axial direction of the honeycomb body; therefore, the evaluation of the purification performance was "F".

In Embodiment examples 42, 43, the shape of each through-hole was changed, as compared with Embodiment example 10. In Embodiment example 42, the through-holes each having an elliptical shape and a length ratio of 1:2 between the axial direction of the honeycomb body and the circumferential direction of the honeycomb body were formed. In Embodiment example 43, the through-holes each having an elliptical shape and a length ratio of 2:1 between the axial direction of the honeycomb body and the circumferential direction of the honeycomb body were formed. In Embodiment examples 42, 43, the evaluations of the durability and the purification performance were "C", as in Embodiment example 10.

In Embodiment example 44, it was configured that the flat foil-corrugated foil joint part B and the flat foil-corrugated foil joint part C face each other with the flat foil interposed therebetween. In Embodiment example 44, it was configured that in the region where the flat foil-corrugated foil joint part B and the flat foil-corrugated foil joint part C overlapped each other in the axial direction, the corrugated foil was located between and in contact with the flat foil-corrugated foil joint part B and the flat foil-corrugated foil joint part C. In consideration of this point, in order to obtain the same effect as that in other Embodiment examples having the thickness of the brazing material of 0.11 mm, in Embodiment example 44, the thickness of the brazing material was set to about half (0.06 mm) of that in the other Embodiment examples. In this configuration, since excessively many joint portions between the flat foil and the corrugated foil were formed, the effect obtained by forming the flat foil-corrugated foil joint part A and the flat foil-corrugated foil joint part B at positions so as not to overlap each other in the axial direction (effect of reducing the thermal stress in the radial direction of the honeycomb body) was not sufficiently exhibited; thus, the evaluations of the durability and the purification performance were "C". In the case in which only the flat foil-corrugated foil joint part B and the flat foil-corrugated foil joint part C were formed, while no flat foil-corrugated foil joint part A was formed, the evaluation results were the same.

In Embodiment example 45, the flat foil-corrugated foil joint part D was formed in the hole forming region in the above-described embodiment. With this configuration, the durability was further enhanced, and thus the evaluation of the durability was "A".

In Embodiment examples 46, 47, a foil where the through-holes were formed was changed, as compared with Embodiment example 10. In Embodiment example 46, the through-holes were formed only in the flat foil. In Embodiment example 47, the through-holes were formed only in the corrugated foil. In Embodiment examples 46, 47, the evaluations of the durability and the purification performance were "C", as in Embodiment example 10.

In Embodiment examples 48, 49, the aperture ratio (%) in the flat foil and the aperture ratio (%) in the corrugated foil were set to be different from each other, as compared with Embodiment example 10. In Embodiment example 48, the aperture ratio in the flat foil was set to 20(%), and the aperture ratio in the corrugated foil was set to 70(%). In Embodiment example 49, the aperture ratio in the flat foil was set to 70(%) and the aperture ratio in the corrugated foil was set to 20(%). In Embodiment examples 48, 49, the evaluations of the durability and the purification performance were "C", as in Embodiment example 10.

In Embodiment examples 50, 51, and Comparative example 17, the position of the start end of the outer mantle-honeycomb body joint part was set to be different from that in Embodiment example 10. In Embodiment examples 50, 51, the outer mantle-honeycomb body joint part was formed in the region of 0.33L in the axial direction from the gas inlet end in the axial direction of the honeycomb body and in the region of 0.33L in the axial direction from the gas outlet end in the axial direction of the honeycomb body; and the evaluation of the durability was "A" and the evaluation of the purification performance was "C". On the other hand, in Comparative example 17, the outer mantle-honeycomb body joint part was formed neither in the region of 0.33L in the axial direction from the gas inlet end in the axial direction of the honeycomb body nor in the region of 0.33L in the axial direction from the gas outlet end in the axial direction of the honeycomb body; thus, the evaluation of the purification performance was "F".

In Embodiment examples 52, 53 and Comparative example 18, the position of the start end of the flat foil-corrugated foil joint part was set to be different from that in Embodiment example 10. In Embodiment examples 52, 53, the outer mantle-honeycomb body joint part was formed in the region of 0.33L in the axial direction from the gas inlet end in the axial direction of the honeycomb body and in the region of 0.33L in the axial direction from the gas outlet end in the axial direction of the honeycomb body; therefore, the evaluation of the durability was "A" and the evaluation of the purification performance was "C". On the other hand, in Comparative example 18, the flat foil-corrugated foil joint part was formed neither in the region of 0.33L in the axial direction from the gas inlet end in the axial direction of the honeycomb body nor in the region of 0.33L in the axial direction of the gas outlet end in the axial direction of the honeycomb body; therefore, the evaluation of the purification performance was "F".

In Embodiment example 54, a gap in the axial direction between the flat foil-corrugated foil joint part A and the flat foil-corrugated foil joint part B was set to be 3 mm, as compared with Embodiment example 10. In this configuration, the evaluation of the durability was "B", and the evaluation of the purification performance was "B". It can be considered that since the flat foil-corrugated foil joint part overlapped some of the through-holes across the end regions and the hole formed region, the flat foil-corrugated foil joint part spreading through these through-holes caused some of the ridges of the corrugated foil (corresponding to the first ridges 30b in the above-described embodiment) and the flat foil to be joined together, to thereby increase the joint strength.

In Embodiment examples 55, 56 and Comparative example 19, the respective widths of the outer mantle-honeycomb body joint part and the flat foil-corrugated foil joint part were set to 5 mm, 7 mm, and 10 mm, as compared with Embodiment example 10. In Embodiment example 55, the evaluation of the durability was "B" and the evaluation of the purification performance was "B". It can be considered that since the flat foil-corrugated foil joint part B overlapped some of the through-holes across the end regions and the hole forming region, the flat foil-corrugated foil joint part B spreading through these through-holes caused some of the ridges of the corrugated foil (corresponding to the first ridges 30b in the above-described embodiment) and flat foil to be joined together, to thereby increase the joint strength. In Embodiment example 56, the flat foil-corrugated foil joint part B was formed in the hole forming region, while neither the flat foil-corrugated foil joint parts A nor B was formed across the end regions and the hole forming region; thus, the evaluation of the durability was "B", and the evaluation of the purification performance was "C". In Comparative example 19, the flat foil-corrugated foil joint part was formed neither in the region of 0.33L in the axial direction from the gas inlet end in the axial direction of the honeycomb body nor in the region of 0.33L in the axial direction from the gas outlet end in the axial direction of the honeycomb body; thus, the evaluation of the purification performance was "F".

In Embodiment example 57, the axial length of the honeycomb body was set to 100 mm, in contrast to Comparative example 19. The flat foil-corrugated foil joint part overlapped some of the through-holes across the end regions and the hole formation region, and the outer mantle-honeycomb body joint part also overlaps some of the through-holes across the end regions and the hole forming region; therefore, the evaluation of the durability was "A", and the evaluation of the purification performance was "B".

### (Modification example)

In the above-described embodiment, a single outer mantle-honeycomb body joint part 50 is provided in each of the first region RE1 and the second region RE2. However, this is not limitative; and it may be configured that at least two or more outer mantle-honeycomb body joint parts 50 are provided in the first region RE1 and in the second region RE2. Even in this configuration, since the thermal expansion of the honeycomb body 10 in the axial direction is reduced, the catalyst carried on the honeycomb body 10 can be prevented from dropping off.

### (Modification example)

In the above-described embodiment, two flat foil-corrugated foil joint parts 60 are provided in each of the third region RE3 and the fourth region RE4 (the flat foil-corrugated foil first joint part 61 and the flat foil-corrugated foil second joint part 62). However, this is not limitative. It may be configured that a single flat foil-corrugated foil joint part 60 is provided in each of the third region RE3 and the fourth region RE4. Additionally, it may be configured that three or more flat foil-corrugated foil joint parts 60 are provided in each of the third region RE3 and the fourth region RE4, respectively.

### (Modification example)

In the above-described embodiment, the outer mantle-honeycomb body joint part 50 and the flat foil-corrugated foil first joint part 61 are formed at the same position in the axial direction. However, this is not limitative; and it may be configured that the outer mantle-honeycomb body joint part 50 and the flat foil-corrugated foil joint part 60 are formed at different positions in the axial direction.

### (Modification example)

In the above-described embodiment, the flat foil-corrugated foil first joint part 61 is placed at a position farther from the center in the axial direction Q of the honeycomb body 10 than the flat foil-corrugated foil second joint part 62 is. However, this is not limitative; and the flat foil-corrugated foil first joint part 61 may be placed at a position closer to the center in the axial direction Q of the honeycomb body 10 than the flat foil-corrugated foil second joint part 62 is. Also in this case, the thermal stress in the radial direction on the honeycomb body 10 can be further reduced. Accordingly, it is possible to further enhance the durability of the honeycomb body 10.

### (Modification example)

In the above-described embodiment, the outer mantle-honeycomb body joint part 50 and the flat foil-corrugated foil joint part 60 are formed by placing the brazing material on the flat foil 40. However, this is not limitative; and the outer mantle-honeycomb body joint part 50 and the flat foil-corrugated foil joint part 60 may be formed by placing the brazing material on the ridges of the corrugated foil 30.

For example, the flat foil-corrugated foil first joint part 61 may be formed by placing the brazing material 61a on the ridges of the corrugated foil 30. In this configuration, it is preferable that in step S1 of Figure 7, the brazing material 61a is placed at positions across the end regions T in the corrugated foil 30 and the hole formation region D in the corrugated foil 30; and in step S2, the corrugated foil 30 and the flat foil 40 are stacked to overlap each other in such a manner that at least one of the through-holes 72 formed in the flat foil 40 and the brazing material 61a overlap each other. Note that among the through-holes 72 formed in flat foil 40, those through-holes that overlap the brazing material 61a placed on the corrugated foil 30 are referred to as third overlapping through-holes 723. The third overlapping through-holes 723 correspond to the second through-holes 72b. In this case, by the heating in step S3, the brazing material 61a is melted and spreads from the back surface 40b to the front surface 40a of the flat foil 40 via the third overlapping through-holes 723.

The brazing material 61a spreads between the third overlapping through-holes 723 and ridges, among the ridges of the corrugated foil 30, which face the third overlapping through-holes 723 in the radial direction of the honeycomb body 10 (corresponding to the second ridges 30b). Thereafter, the brazing material 61a solidifies to form the flat foil-corrugated foil first joint part 61, and thus the corrugated foil 30 and flat foil 40 are joined together; and at the same time, the flat foil 40 and the second ridges 30b are joined together by the flat foil-corrugated foil first joint part 61 spreading via the third overlapping through-holes 723 (the second through-holes 72b).

### (Modification example)

In the above-described embodiment, after the brazing material 50a for forming the outer mantle-honeycomb body joint part 50 is placed on the flat foil 40 (S1), the corrugated foil 30 and the flat foil 40 are wound together around the axial direction so as to produce the honeycomb body 10 (S2). However, this is not limitative; and the brazing material 50a may be placed on the outer circumferential surface of the honeycomb body 10 after the honeycomb body 10 is produced.

### (Modification example)

In the above-described embodiment, the through-holes are formed in both the flat foil and the corrugated foil. However, this is not limitative; and it may be configured that the through-holes are formed in only the flat foil.

### (Modification example)

It may be configured that the through-holes 70 formed respectively in the corrugated foil 30 and in the flat foil 40 are different in at least either of the aperture area and the shape. For example, the through-holes 71 in the corrugated foil 30 and the through-holes 72 in the flat foil 40 may be configured to have different aperture areas and shapes. Each through-hole 70 may have an elliptical shape or a square shape, in addition to a circular shape.

### (Modification example)

The cross sectional shape of the honeycomb unit 1 is not limited to a circular shape, and may also be an elliptical shape, an oval shape, a race track shape, or any other shape. The race track shape is a shape that imitates a race track in a playground, and this is a shape formed by drawing two lines parallel to each other, and connecting one ends of these lines to each other by an arc, and also connecting the other ends of these lines to each other by an arc.

### (Modification example)

The corrugated foil 30 is not limited to a straight shape in which its waves extend along the axial direction, and may have an offset structure in which the phases of the waves are different from each other. In other words, it may be configured to have a shape in which wave peaks are arranged in a zigzag pattern along the axial direction.

### Reference Signs List

1 honeycomb unit
10 honeycomb body
11 gas inlet end
12 gas outlet end
20 outer mantle
30 corrugated foil
30a first ridge
30b second ridge
40 flat foil
50 outer mantle-honeycomb body joint part
60 flat foil-corrugated foil joint part
61 flat foil-corrugated foil first joint part
62 flat foil-corrugated foil second joint part
70 through-hole
72a first through-hole
72b second through-hole

## Claims

1. A honeycomb unit (1) comprising:
a honeycomb body (10) configured by stacking a flat foil (40) and a corrugated foil (30) that are made of metal foils, the honeycomb body (10) having a plurality of through-holes (70) formed in the metal foils; and
an outer mantle (20) in which the honeycomb body (10) is housed,
the honeycomb body (10) and the outer mantle (20) being joined together by outer mantle-honeycomb body joint parts (50), the flat foil (40) and the corrugated foil (30) being joined together by flat foil-corrugated foil joint parts (60),
at least one of the outer mantle-honeycomb body joint parts (50) being formed in each of a first region (RE1) and a second region (RE2) of the honeycomb body (10),
at least one of the flat foil-corrugated foil joint parts (60) being formed in each of a third region (RE3) and a fourth region (RE4) of the honeycomb body (10),
when a length in the axial direction of the honeycomb body (10) is represented by L,
each of the first region (RE1) and the third region (RE3) being a region of 0.33L in the axial direction from a gas inlet end (11) in the axial direction of the honeycomb body (10), and
each of the second region (RE2) and the fourth region (RE4) being a region of 0.33L in the axial direction from a gas outlet end (12) in the axial direction of the honeycomb body (10),
wherein the honeycomb unit (1) is **characterized by**:
the plurality of through-holes (70) being formed in a hole formation region (D) located between end regions (T) of the honeycomb body (10),
the plurality of through-holes (70) is formed at least in the flat foil (40),
each end region (T) having a width of 15 mm or less in the axial direction from each end (11,12) in the axial direction of the honeycomb body (10) in the case in which the length L is 50 mm or more; and each end region (T) having a width of (0.5L-10) mm or less in the axial direction from each end (11,12) in the axial direction of the honeycomb body (10) in the case in which the length L is less than 50 mm,
an aperture area of each through-hole (70) being 50.3 (mm²) or less,
in the hole formation region (D), when a ratio of a total aperture area of the plurality of through-holes (70) is represented by S(%), a conditional expression of 20(%)≦ S≦70(%) being satisfied,
at least one of the outer mantle-honeycomb body joint parts (50) spreads in the axial direction across the end regions (T) in the flat foil (40) and the hole formation region (D) in the flat foil (40), and
when, among the plurality of through-holes (72) formed in the flat foil (40), through-holes overlapping the outer mantle-honeycomb body joint part (50) spreading across the end regions (T) and the hole formation region (D) are defined as first through-holes (72a), and when, among ridges of the corrugated foil (30), ridges facing the first through-holes (72a) in a radial direction of the honeycomb body (10) are defined as first ridges (30a),
the outer mantle-honeycomb body joint part (50) spreads between the first through-holes (72a) and the first ridges (30a) via the first through-holes (72a).

2. A honeycomb unit (1) comprising:
a honeycomb body (10) configured by stacking a flat foil (40) and a corrugated foil (30) that are made of metal foils, the honeycomb body (10) having a plurality of through-holes (70) formed in the metal foils; and
an outer mantle (20) in which the honeycomb body (10) is housed,
the honeycomb body (10) and the outer mantle (20) being joined together by outer mantle-honeycomb body joint parts (50), the flat foil (40) and the corrugated foil (30) being joined together by flat foil-corrugated foil joint parts (60),
at least one of the outer mantle-honeycomb body joint parts (50) being formed in each of a first region (RE1) and a second region (RE2) of the honeycomb body (10),
at least one of the flat foil-corrugated foil joint parts (60) being formed in each of a third region (RE3) and a fourth region (RE4) of the honeycomb body (10),
when a length in the axial direction of the honeycomb body (10) is represented by L,
each of the first region (RE1) and the third region (RE3) being a region of 0.33L in the axial direction from a gas inlet end (11) in the axial direction of the honeycomb body (10), and
each of the second region (RE2) and the fourth region (RE4) being a region of 0.33L in the axial direction from a gas outlet end (12) in the axial direction of the honeycomb body (10),
wherein the honeycomb unit (1) is **characterized by**:
the plurality of through-holes (70) being formed in a hole formation region (D) located between end regions (T) of the honeycomb body (10),
the plurality of through-holes (70) is formed at least in the flat foil (40),
each end region (T) having a width of 15 mm or less in the axial direction from each end (11,12) in the axial direction of the honeycomb body (10) in the case in which the length L is 50 mm or more; and each end region (T) having a width of (0.5L-10) mm or less in the axial direction from each end (11,12) in the axial direction of the honeycomb body (10) in the case in which the length L is less than 50 mm,
an aperture area of each through-hole (70) being 50.3 (mm²) or less,
in the hole formation region (D), when a ratio of a total aperture area of the plurality of through-holes (70) is represented by S(%), a conditional expression of 20(%)≦ S≦70(%) being satisfied,
at least one of the flat foil-corrugated foil joint parts (60) spreads in the axial direction across the end regions (T) in the flat foil (40) and the hole formation region (D) in the flat foil (40), and
when, among the plurality of through-holes (72) formed in the flat foil (40), through-holes overlapping the flat foil-corrugated foil joint part (60) spreading across the end regions (T) and the hole formation region (D) are defined as second through-holes (72b), and when, among ridges of the corrugated foil (30), ridges facing the second through-holes (72b) in a radial direction of the honeycomb body (10) are defined as second ridges (30b),
the flat foil-corrugated foil joint part (60) spreads between the second through-holes (72b) and the second ridges (30b) via the second through-holes (72b).

3. The honeycomb unit (1) according to claim 1 or 2, wherein
the flat foil-corrugated foil joint parts (60) include a flat foil-corrugated foil first joint part (61) that joins a back surface (40b) of the flat foil (40) and the corrugated foil (30) together, and a flat foil-corrugated foil second joint part (62) that joins a front surface (40a) of the flat foil (40) and the corrugated foil (30) together, and
the flat foil-corrugated foil first joint part (61) and the flat foil-corrugated foil second joint part (62) are formed at positions so as not to overlap each other in the axial direction.

4. The honeycomb unit (1) according to any one of claims 1 to 3, wherein an aperture area of each through-hole (70) is 12.6 (mm²) or less.

5. The honeycomb unit (1) according to any one of claims 1 to 4, wherein an aperture area of each through-hole (70) is 0.79 (mm²) or less.

6. The honeycomb unit (1) according to any one of claims 1 to 5, wherein the S(%) satisfies a conditional expression of 25(%) ≦ S ≦ 60(%).

7. The honeycomb unit (1) according to any one of claims 1 to 6, wherein the S(%) satisfies a conditional expression of 30(%) ≦ S ≦ 50(%).

8. The honeycomb unit (1) according to any one of claims 1 to 7, wherein
the outer mantle-honeycomb body joint part (50) formed in the first region (RE1) and the outer mantle-honeycomb body joint part (50) formed in the second region (RE2) are formed to be symmetrical in the axial direction with respect to a symmetry plane extending in a radial direction of the honeycomb body (10) through a center (Q) in the axial direction of the honeycomb body (10), and
the flat foil-corrugated foil joint part (60) formed in the third region (RE3) and the flat foil-corrugated foil joint part (60) formed in the fourth region (RE4) are formed to be symmetrical in the axial direction with respect to the symmetry plane.

9. The honeycomb unit (1) according to any one of claims 1 to 8, wherein the through-holes (70) are formed in a zigzag pattern along the axial direction.

10. A production method of producing the honeycomb unit (1) according to claim 1, wherein
the method comprises:
a brazing material placement step (S1) of arranging a brazing material (50a) for forming the outer mantle-honeycomb body joint parts (50), wherein
in the brazing material placement step (S1), the brazing material (50a) is placed at positions across the end regions (T) in the flat foil (40) and the hole formation region (D) in the flat foil (40), the position overlapping at least one through-hole of the plurality of through-holes (72) formed in the flat foil (40), and
when, among the plurality of through-holes (72) formed in the flat foil (40), through-holes overlapping the brazing material (50a) are defined as first overlapping through-holes (721);
a honeycomb body production step (S2) of producing the honeycomb body (10) by stacking the flat foil (40) and the corrugated foil (30); and
a heating step (S3) of heating the outer mantle (20) and the honeycomb body (10) inserted in the outer mantle (20), wherein
in the heating step (S3), the brazing material (50a) that is melted spreads via the first overlapping through-holes (721) and between the first overlapping through-holes (721) and first ridges (30a) among the ridges of the corrugated foil (30), the first ridges (30a) facing the first overlapping through-holes (721) in the radial direction of the honeycomb body (10).

11. A production method of producing the honeycomb unit (1) according to claim 2, wherein
the method comprises:
a brazing material placement step (S1) of arranging a brazing material (61a) for forming the flat foil-corrugated foil joint parts (60), wherein
in the brazing material placement step (S1), the brazing material (61a) is placed at positions across the end regions (T) in the flat foil (40) and the hole formation region (D) in the flat foil (40), the position overlapping at least one through-hole of the plurality of through-holes (72) formed in the flat foil (40), and
when, among the plurality of through-holes (72) formed in the flat foil (40), through-holes overlapping the brazing material (61a) are defined as second overlapping through-holes (722);
a honeycomb body production step (S2) of producing the honeycomb body (10) by stacking the flat foil (40) and the corrugated foil (30); and
a heating step (S3) of heating the outer mantle (20) and the honeycomb body (10) inserted in the outer mantle (20), wherein
in the heating step (S3), the brazing material (61a) that is melted spreads via the second overlapping through-holes (722) and between the second overlapping through-holes (722) and second ridges (30b) among the ridges of the corrugated foil (30), the second ridges (30b) facing the second overlapping through-holes (722) in the radial direction of the honeycomb body (10).

12. A production method of producing the honeycomb unit (1) according to claim 2, wherein
the method comprises:
a brazing material placement step (S1) of arranging a brazing material (61a) for forming the flat foil-corrugated foil joint parts (60), wherein
in the brazing material placement step (S1), the brazing material (61a) is placed at positions across the end regions (T) in the corrugated foil (30) and the hole formation region (D) in the corrugated foil (30);
a honeycomb body production step (S2) of producing the honeycomb body (10) by stacking the flat foil (40) and the corrugated foil (30), wherein
in the honeycomb body production step (S2), the flat foil (40) and the corrugated foil (30) are stacked such that the brazing material (61a) overlaps at least one through-hole among the plurality of through-holes (72) formed in the flat foil (40), and
when, among the plurality of through-holes (72) formed in the flat foil (40), through-holes overlapping the brazing material (61a) are defined as third overlapping through-holes (723); and
a heating step (S3) of heating the outer mantle (20) and the honeycomb body (10) inserted in the outer mantle (20), wherein
in the heating step (S3), the brazing material (61a) that is melted spreads via the third overlapping through-holes (723) and between the third overlapping through-holes (723) and second ridges (30b) among the ridges of the corrugated foil (30), the second ridges (30b) facing the third overlapping through-holes (723) in the radial direction of the honeycomb body (10).

13. The production method according to any one of claims 10 to 12, wherein a thickness in the radial direction of the brazing material (50a,61a) placed in the brazing material placement step (S1) is 0.1 mm or less, preferably 0.01 mm or more and 0.05 mm or less.

## Patentansprüche

1. Wabeneinheit (1), umfassend:
einen Wabenkörper (10), der konfiguriert ist durch Stapeln einer Flachfolie (40) und einer Wellfolie (30), die aus Metallfolien hergestellt sind, wobei der Wabenkörper (10) eine Vielzahl von Durchgangslöchern (70) aufweist, die in den Metallfolien gebildet sind; und
einen Außenmantel (20), in dem der Wabenkörper (10) untergebracht ist,
wobei der Wabenkörper (10) und der Außenmantel (20) durch Außenmantel-Wabenkörper-Gelenkteile (50) miteinander verbunden sind, wobei die Flachfolie (40) und die Wellfolie (30) durch Flachfolie-Wellfolie-Gelenkteile (60) miteinander verbunden sind,
wobei mindestens einer der Außenmantel-Wabenkörper-Gelenkteile (50) in jeder aus einer ersten Region (RE1) und einer zweiten Region (RE2) des Wabenkörpers (10) gebildet ist,
wobei mindestens einer aus den Flachfolie-Wellfolie-Gelenkteilen (60) in jeder aus einer dritten Region (RE3) und einer vierten Region (RE4) des Wabenkörpers (10) gebildet ist,
wenn eine Länge in der Axialrichtung des Wabenkörpers (10) durch L dargestellt ist,
jede aus der ersten Region (RE1) und der dritten Region (RE3) eine Region von 0,33 L in der Axialrichtung von einem Gaseinlassende (11) in der Axialrichtung des Wabenkörpers (10) ist, und
jede aus der zweiten Region (RE2) und der vierten Region (RE4) eine Region von 0,33 L in der Axialrichtung von einem Gasauslassende (12) in der Axialrichtung des Wabenkörpers (10) ist,
wobei die Wabeneinheit (1) **dadurch gekennzeichnet ist, dass**:
die Vielzahl von Durchgangslöchern (70) in einer Lochbildungsregion (D) gebildet sind, die sich zwischen Endregionen (T) des Wabenkörpers (10) befinden,
die Vielzahl von Durchgangslöchern (70) mindestens in der Flachfolie (40) gebildet ist,
jede Endregion (T) eine Breite von 15 mm oder weniger in der Axialrichtung von jedem Ende (11, 12) in der Axialrichtung des Wabenkörpers (10) aufweist, in dem Fall, in dem die Länge L 50 mm oder mehr ist; und jede Endregion (T) eine Breite von (0,5 L - 10) mm oder weniger in der Axialrichtung von jedem Ende (11, 12) in der Axialrichtung des Wabenkörpers (10) aufweist, in dem Fall, in dem die Länge L weniger als 50 mm ist,
eine Öffnungsfläche jeden Durchgangsloches (70) 50,3 (mm²) oder weniger ist,
in der Lochbildungsregion (D), wenn ein Verhältnis einer Gesamtöffnungsfläche der Vielzahl von Durchgangslöchern (70) dargestellt ist durch S (%), ein bedingter Ausdruck von 20 (%) ≤ S ≤ 70 (%) erfüllt ist,
sich mindestens einer aus den Außenmantel-Wabenkörper-Gelenkteilen (50) in die Axialrichtung über die Endregionen (T) in der Flachfolie (40) und die Lochbildungsregion (D) in der Flachfolie (40) hinweg ausbreitet, und
wenn, aus der Vielzahl von Durchgangslöchern (72), die in der Flachfolie (40) gebildet sind, Durchgangslöcher, die den Außenmantel-Wabenkörper-Gelenkteil (50) überlagern, der sich über die Endregionen (T) und die Lochbildungsregion (D) hinweg ausbreitet, als erste Durchgangslöcher (72a) definiert sind, und wenn, aus den Rillen der Wellfolie (30), Rillen, die den ersten Durchgangslöchern (72a) in einer Radialrichtung des Wabenkörpers (10) zugewandt sind, als erste Rillen (30a) definiert sind,
sich der Außenmantel-Wabenkörper-Gelenkteil (50) zwischen den ersten Durchgangslöchern (72a) und den ersten Rillen (30a) über die ersten Durchgangslöcher (72a) ausbreitet.

2. Wabeneinheit (1), umfassend:
einen Wabenkörper (10), der konfiguriert ist durch Stapeln einer Flachfolie (40) und einer Wellfolie (30), die aus Metallfolien hergestellt sind, wobei der Wabenkörper (10) eine Vielzahl von Durchgangslöchern (70) aufweist, die in den Metallfolien gebildet sind; und
einen Außenmantel (20), in dem der Wabenkörper (10) untergebracht ist,
wobei der Wabenkörper (10) und der Außenmantel (20) durch Außenmantel-Wabenkörper-Gelenkteile (50) miteinander verbunden sind, wobei die Flachfolie (40) und die Wellfolie (30) durch Flachfolie-Wellfolie-Gelenkteile (60) miteinander verbunden sind,
wobei mindestens einer der Außenmantel-Wabenkörper-Gelenkteile (50) in jeder aus einer ersten Region (RE1) und einer zweiten Region (RE2) des Wabenkörpers (10) gebildet ist,
wobei mindestens einer aus den Flachfolie-Wellfolie-Gelenkteilen (60) in jeder aus einer dritten Region (RE3) und einer vierten Region (RE4) des Wabenkörpers (10) gebildet ist,
wenn eine Länge in der Axialrichtung des Wabenkörpers (10) durch L dargestellt ist,
jede aus der ersten Region (RE1) und der dritten Region (RE3) eine Region von 0,33 L in der Axialrichtung von einem Gaseinlassende (11) in der Axialrichtung des Wabenkörpers (10) ist, und
jede aus der zweiten Region (RE2) und der vierten Region (RE4) eine Region von 0,33 L in der Axialrichtung von einem Gasauslassende (12) in der Axialrichtung des Wabenkörpers (10) ist,
wobei die Wabeneinheit (1) **dadurch gekennzeichnet ist, dass**:
die Vielzahl von Durchgangslöchern (70) in einer Lochbildungsregion (D) gebildet sind, die sich zwischen Endregionen (T) des Wabenkörpers (10) befinden,
die Vielzahl von Durchgangslöchern (70) mindestens in der Flachfolie (40) gebildet ist,
jede Endregion (T) eine Breite von 15 mm oder weniger in der Axialrichtung von jedem Ende (11, 12) in der Axialrichtung des Wabenkörpers (10) aufweist, in dem Fall, in dem die Länge L 50 mm oder mehr ist; und jede Endregion (T) eine Breite von (0,5 L - 10) mm oder weniger in der Axialrichtung von jedem Ende (11, 12) in der Axialrichtung des Wabenkörpers (10) aufweist, in dem Fall, in dem die Länge L weniger als 50 mm ist,
eine Öffnungsfläche jeden Durchgangsloches (70) 50,3 (mm²) oder weniger ist,
in der Lochbildungsregion (D), wenn ein Verhältnis einer Gesamtöffnungsfläche der Vielzahl von Durchgangslöchern (70) dargestellt ist durch S (%), ein bedingter Ausdruck von 20 (%) ≤ S ≤ 70 (%) erfüllt ist,
sich mindestens einer aus den Flachfolie-Wellfolie-Gelenkteilen (60) in die Axialrichtung über die Endregionen (T) in der Flachfolie (40) und die Lochbildungsregion (D) in der Flachfolie (40) hinweg ausbreitet, und
wenn, aus der Vielzahl von Durchgangslöchern (72), die in der Flachfolie (40) gebildet sind, Durchgangslöcher, die den Flachfolie-Wellfolie-Gelenkteil (60) überlagern, der sich über die Endregionen (T) und die Lochbildungsregion (D) hinweg ausbreitet, als zweite Durchgangslöcher (72b) definiert sind, und wenn, aus den Rillen der Wellfolie (30), Rillen, die den zweiten Durchgangslöchern (72b) in einer Radialrichtung des Wabenkörpers (10) zugewandt sind, als zweite Rillen (30b) definiert sind,
sich der Flachfolie-Wellfolie-Gelenkteil (60) zwischen den zweiten Durchgangslöchern (72b) und den zweiten Rillen (30b) über die zweiten Durchgangslöcher (72b) ausbreitet.

3. Wabeneinheit (1) nach Anspruch 1 oder 2, wobei
die Flachfolie-Wellfolie-Gelenkteile (60) einen ersten Flachfolie-Wellfolie-Gelenkteil (61), der eine Rückfläche (40b) der Flachfolie (40) und der Wellfolie (30) miteinander verbindet, und einen zweiten Flachfolie-Wellfolie-Gelenkteil (62) beinhalten, der eine Vorderfläche (40a) der Flachfolie (40) und der Wellfolie (30) miteinander verbindet, und
der erste Flachfolie-Wellfolie-Gelenkteil (61) und der zweite Flachfolie-Wellfolie-Gelenkteil (62) an Positionen gebildet sind, sodass sie einander in der Axialrichtung nicht überlagern.

4. Wabeneinheit (1) nach einem der Ansprüche 1 bis 3, wobei eine Öffnungsfläche jeden Durchgangsloches (70) 12,6 (mm²) oder weniger ist.

5. Wabeneinheit (1) nach einem der Ansprüche 1 bis 4, wobei eine Öffnungsfläche jeden Durchgangsloches (70) 0,79 (mm²) oder weniger ist.

6. Wabeneinheit (1) nach einem der Ansprüche 1 bis 5, wobei S (%) einen bedingten Ausdruck von 25 (%) ≤ S ≤ 60 (%) erfüllt.

7. Wabeneinheit (1) nach einem der Ansprüche 1 bis 6, wobei S (%) einen bedingten Ausdruck von 30 (%) ≤ S ≤ 50 (%) erfüllt.

8. Wabeneinheit (1) nach einem der Ansprüche 1 bis 7, wobei
der Außenmantel-Wabenkörper-Gelenkteil (50), der in der ersten Region (RE1) gebildet ist, und der Außenmantel-Wabenkörper-Gelenkteil (50), der in der zweiten Region (RE2) gebildet ist, so gebildet sind, dass sie in der Axialrichtung symmetrisch sind in Bezug auf eine Symmetrieebene, die sich in einer Radialrichtung des Wabenkörpers (10) durch eine Mitte (Q) in der Axialrichtung des Wabenkörpers (10) erstreckt, und
der Flachfolie-Wellfolie-Gelenkteil (60), der in der dritten Region (RE3) gebildet ist, und der Flachfolie-Wellfolie-Gelenkteil (60), der in der vierten Region (RE4) gebildet ist, so gebildet sind, dass sie in der Axialrichtung symmetrisch sind in Bezug auf die Symmetrieebene.

9. Wabeneinheit (1) nach einem der Ansprüche 1 bis 8, wobei die Durchgangslöcher (70) in einem Zickzack-Muster entlang der Axialrichtung gebildet sind.

10. Herstellungsverfahren des Herstellens der Wabeneinheit (1) nach Anspruch 1, wobei das Verfahren Folgendes umfasst:
einen Lötmaterial-Platzierungsschritt (S1) des Anordnens eines Lötmaterials (50a) zum Bilden der Außenmantel-Wabenkörper-Gelenkteile (50), wobei
in dem Lötmaterial-Platzierungsschritt (S1) das Lötmaterial (50a) an Positionen über die Endregionen (T) in der Flachfolie (40) und die Lochbildungsregion (D) in der Flachfolie (40) hinweg platziert wird, wobei die Position mindestens ein Durchgangsloch der Vielzahl von Durchgangslöchern (72) überlagert, die in der Flachfolie (40) gebildet sind, und
wenn, aus der Vielzahl von Durchgangslöchern (72), die in der Flachfolie (40) gebildet sind, Durchgangslöcher, die das Lötmaterial (50a) überlagern, als erste überlagernde Durchgangslöcher (721) definiert sind;
einen Wabenkörper-Herstellungsschritt (S2) des Herstellens des Wabenkörpers (10) durch Stapeln der Flachfolie (40) und der Wellfolie (30); und
einen Erhitzungsschritt (S3) des Erhitzens des Außenmantels (20) und des Wabenkörpers (10), der in den Außenmantel (20) eingefügt ist, wobei
sich in dem Erhitzungsschritt (S3) das Lötmaterial (50a), das geschmolzen ist, über die ersten überlagernden Durchgangslöcher (721) und zwischen den ersten überlagernden Durchgangslöchern (721) und ersten Rillen (30a) aus den Rillen der Wellfolie (30) ausbreitet, wobei die ersten Rillen (30a) den ersten überlagernden Durchgangslöchern (721) in der Radialrichtung des Wabenkörpers (10) zugewandt sind.

11. Herstellungsverfahren des Herstellens der Wabeneinheit (1) nach Anspruch 2, wobei das Verfahren Folgendes umfasst:
einen Lötmaterial-Platzierungsschritt (S1) des Anordnens eines Lötmaterials (61a) zum Bilden der Flachfolie-Wellfolie-Gelenkteile (60), wobei
in dem Lötmaterial-Platzierungsschritt (S1) das Lötmaterial (61a) an Positionen über die Endregionen (T) in der Flachfolie (40) und die Lochbildungsregion (D) in der Flachfolie (40) hinweg platziert wird, wobei die Position mindestens ein Durchgangsloch der Vielzahl von Durchgangslöchern (72) überlagert, die in der Flachfolie (40) gebildet sind, und
wenn, aus der Vielzahl von Durchgangslöchern (72), die in der Flachfolie (40) gebildet sind, Durchgangslöcher, die das Lötmaterial (61a) überlagern, als zweite überlagernde Durchgangslöcher (722) definiert sind;
einen Wabenkörper-Herstellungsschritt (S2) des Herstellens des Wabenkörpers (10) durch Stapeln der Flachfolie (40) und der Wellfolie (30); und
einen Erhitzungsschritt (S3) des Erhitzens des Außenmantels (20) und des Wabenkörpers (10), der in den Außenmantel (20) eingefügt ist, wobei
sich in dem Erhitzungsschritt (S3) das Lötmaterial (61a), das geschmolzen ist, über die zweiten überlagernden Durchgangslöcher (722) und zwischen den zweiten überlagernden Durchgangslöchern (722) und zweiten Rillen (30b) aus den Rillen der Wellfolie (30) ausbreitet, wobei die zweiten Rillen (30b) den zweiten überlagernden Durchgangslöchern (722) in der Radialrichtung des Wabenkörpers (10) zugewandt sind.

12. Herstellungsverfahren des Herstellens der Wabeneinheit (1) nach Anspruch 2, wobei
das Verfahren Folgendes umfasst:
einen Lötmaterial-Platzierungsschritt (S1) des Anordnens eines Lötmaterials (61a) zum Bilden der Flachfolie-Wellfolie-Gelenkteile (60), wobei
in dem Lötmaterial-Platzierungsschritt (S1) das Lötmaterial (61a) an Positionen über die Endregionen (T) in der Wellfolie (30) und die Lochbildungsregion (D) in der Wellfolie (30) hinweg platziert wird;
einen Wabenkörper-Herstellungsschritt (S2) des Herstellens des Wabenkörpers (10) durch Stapeln der Flachfolie (40) und der Wellfolie (30), wobei
in dem Wabenkörper-Herstellungsschritt (S2) die Flachfolie (40) und die Wellfolie (30) so gestapelt werden, dass das Lötmaterial (61a) mindestens ein Durchgangsloch aus der Vielzahl von Durchgangslöchern (72) überlagert, die in der Flachfolie (40) gebildet sind, und
wenn, aus der Vielzahl von Durchgangslöchern (72), die in der Flachfolie (40) gebildet sind, Durchgangslöcher, die das Lötmaterial (61a) überlagern, als dritte überlagernde Durchgangslöcher (723) definiert sind; und
einen Erhitzungsschritt (S3) des Erhitzens des Außenmantels (20) und des Wabenkörpers (10), der in den Außenmantel (20) eingefügt ist, wobei
sich in dem Erhitzungsschritt (S3) das Lötmaterial (61a), das geschmolzen ist, über die dritten überlagernden Durchgangslöcher (723) und zwischen den dritten überlagernden Durchgangslöchern (723) und zweiten Rillen (30b) aus den Rillen der Wellfolie (30) ausbreitet, wobei die zweiten Rillen (30b) den dritten überlagernden Durchgangslöchern (723) in der Radialrichtung des Wabenkörpers (10) zugewandt sind.

13. Herstellungsverfahren nach einem der Ansprüche 10 bis 12, wobei eine Dicke in der Radialrichtung des Lötmaterials (50a, 61a), das in dem Lötmaterial-Platzierungsschritt (S1) platziert wird, 0,1 mm oder weniger ist, bevorzugt 0,01 mm oder mehr und 0,05 mm oder weniger.

## Revendications

1. Unité en nid d'abeilles (1) comprenant :
un corps en nid d'abeilles (10) conçu par empilement d'une feuille plate (40) et d'une feuille ondulée (30) consistant en des feuilles de métal, le corps en nid d'abeilles (10) ayant une pluralité de trous traversants (70) formés dans les feuilles de métal, et
une enveloppe extérieure (20) dans laquelle est logé le corps en nid d'abeilles (10) ;
le corps en nid d'abeilles (10) et l'enveloppe extérieure (20) étant reliés par des parties de liaison (50) entre enveloppe extérieure et corps en nid d'abeilles, la feuille plate (40) et la feuille ondulée (30) étant reliées par des parties de liaison (60) entre feuille plate et feuille ondulée,
au moins une des parties de liaison (50) entre enveloppe extérieure et corps en nid d'abeilles étant formée dans une première région (RE1) et dans une deuxième région (RE2) du corps en nid d'abeilles (10),
au moins une des parties de liaison (60) entre feuille plate et feuille ondulée étant formée dans une troisième région (RE3) et dans une quatrième région (RE4) du corps en nid d'abeilles (10),
soit la longueur dans la direction axiale du corps en nid d'abeilles (10) représentée par L :
la première région (RE1) et la troisième région (RE3) correspondent chacune à une région faisant 0,33 L dans la direction axiale, à partir d'une extrémité d'entrée de gaz (11) dans la direction axiale du corps en nid d'abeilles (10), et
la deuxième région (RE2) et la quatrième région (RE4) correspondent chacune à une région faisant 0,33 L dans la direction axiale, à partir d'une extrémité de sortie de gaz (12) dans la direction axiale du corps en nid d'abeilles (10) ;
l'unité en nid d'abeilles (1) étant **caractérisée en ce que** :
la pluralité de trous traversants (70) est formée dans une région de formation de trous (D) située entre les régions d'extrémité (T) du corps en nid d'abeilles (10),
la pluralité de trous traversants (70) est formée au moins dans la feuille plate (40),
chaque région d'extrémité (T) a une largeur inférieure ou égale à 15 mm dans la direction axiale à partir de chaque extrémité (11, 12) dans la direction axiale du corps en nid d'abeilles (10) lorsque la longueur L est supérieure ou égale à 50 mm ; et chaque région d'extrémité (T) a une largeur inférieure ou égale à (0,5 L - 10) mm dans la direction axiale à partir de chaque extrémité (11, 12) dans la direction axiale du corps en nid d'abeilles (10) lorsque la longueur L est inférieure à 50 mm,
la superficie d'ouverture de chaque trou traversant (70) est inférieure ou égale à 50,3 (mm²),
dans la région de formation de trous (D), le rapport de la superficie d'ouverture totale de la pluralité de trous traversants (70) étant représenté par S (%), l'expression conditionnelle 20 (%) ≤ S ≤ 70 (%) est vérifiée,
au moins une des parties de liaison (50) entre enveloppe extérieure et corps en nid d'abeille s'étend dans la direction axiale sur les régions d'extrémité (T) de la feuille plate (40) et la région de formation de trous (D) de la feuille plate (40), et
soit, parmi la pluralité de trous traversants (72) formés dans la feuille plate (40), des trous traversants chevauchant la partie de liaison (50) entre enveloppe extérieure et corps en nid d'abeille qui s'étend sur les régions d'extrémité (T) et la région de formation de trous (D) définis comme premiers trous traversants (72a), et soit, parmi les nervures de la feuille ondulée (30), des nervures tournées vers les premiers trous traversants (72a) dans la direction radiale du corps en nid d'abeille (10) définies comme premières nervures (30a) :
la partie de liaison (50) entre enveloppe extérieure et corps en nid d'abeille s'étend entre les premiers trous traversants (72a) et les premières nervures (30a) par l'intermédiaire des premiers trous traversants (72a).

2. Unité en nid d'abeilles (1) comprenant :
un corps en nid d'abeilles (10) conçu par empilement d'une feuille plate (40) et d'une feuille ondulée (30) consistant en des feuilles de métal, le corps en nid d'abeilles (10) ayant une pluralité de trous traversants (70) formés dans les feuilles de métal, et
une enveloppe extérieure (20) dans laquelle est logé le corps en nid d'abeilles (10) ;
le corps en nid d'abeilles (10) et l'enveloppe extérieure (20) étant reliés par des parties de liaison (50) entre enveloppe extérieure et corps en nid d'abeilles, la feuille plate (40) et la feuille ondulée (30) étant reliées par des parties de liaison (60) entre feuille plate et feuille ondulée,
au moins une des parties de liaison (50) entre enveloppe extérieure et corps en nid d'abeilles étant formée dans une première région (RE1) et dans une deuxième région (RE2) du corps en nid d'abeilles (10),
au moins une des parties de liaison (60) entre feuille plate et feuille ondulée étant formée dans une troisième région (RE3) et dans une quatrième région (RE4) du corps en nid d'abeilles (10),
soit la longueur dans la direction axiale du corps en nid d'abeilles (10) représentée par L :
la première région (RE1) et la troisième région (RE3) correspondent chacune à une région faisant 0,33 L dans la direction axiale, à partir d'une extrémité d'entrée de gaz (11) dans la direction axiale du corps en nid d'abeilles (10), et
la deuxième région (RE2) et la quatrième région (RE4) correspondent chacune à une région faisant 0,33 L dans la direction axiale, à partir d'une extrémité de sortie de gaz (12) dans la direction axiale du corps en nid d'abeilles (10) ;
l'unité en nid d'abeilles (1) étant **caractérisée en ce que** :
la pluralité de trous traversants (70) est formée dans une région de formation de trous (D) située entre les régions d'extrémité (T) du corps en nid d'abeilles (10),
la pluralité de trous traversants (70) est formée au moins dans la feuille plate (40),
chaque région d'extrémité (T) a une largeur inférieure ou égale à 15 mm dans la direction axiale à partir de chaque extrémité (11, 12) dans la direction axiale du corps en nid d'abeilles (10) lorsque la longueur L est supérieure ou égale à 50 mm ; et chaque région d'extrémité (T) a une largeur inférieure ou égale à (0,5 L - 10) mm dans la direction axiale à partir de chaque extrémité (11, 12) dans la direction axiale du corps en nid d'abeilles (10) lorsque la longueur L est inférieure à 50 mm,
la superficie d'ouverture de chaque trou traversant (70) est inférieure ou égale à 50,3 (mm²),
dans la région de formation de trous (D), le rapport de la superficie d'ouverture totale de la pluralité de trous traversants (70) étant représenté par S (%), l'expression conditionnelle 20 (%) ≤ S ≤ 70 (%) est vérifiée,
au moins une des parties de liaison (60) entre feuille plate et feuille ondulée s'étend dans la direction axiale sur les régions d'extrémité (T) de la feuille plate (40) et la région de formation de trous (D) de la feuille plate (40), et
soit, parmi la pluralité de trous traversants (72) formés dans la feuille plate (40), des trous traversants chevauchant la partie de liaison (60) entre feuille plate et feuille ondulée qui s'étend sur les régions d'extrémité (T) et la région de formation de trous (D) définis comme deuxièmes trous traversants (72b), et soit, parmi les nervures de la feuille ondulée (30), des nervures tournées vers les deuxièmes trous traversants (72b) dans la direction radiale du corps en nid d'abeille (10) définies comme deuxièmes nervures (30b) :
la partie de liaison (60) entre feuille plate et feuille ondulée s'étend entre les deuxièmes trous traversants (72b) et les deuxièmes nervures (30b) par l'intermédiaire des deuxièmes trous traversants (72b).

3. Unité en nid d'abeilles (1) selon la revendication 1 ou 2, dans laquelle
les parties de liaison (60) entre feuille plate et feuille ondulée comprennent une première partie de liaison (61) qui lie une surface arrière (40b) de la feuille plate (40) à la feuille ondulée (30), et une deuxième partie de liaison (62) qui lie une surface avant (40a) de la feuille plate (40) à la feuille ondulée (30), et
la première partie de liaison (61) et la deuxième partie de liaison (62) entre feuille plate et feuille ondulée sont formées à des emplacements tels qu'elles ne se chevauchent pas l'une l'autre dans la direction axiale.

4. Unité en nid d'abeilles (1) selon l'une quelconque des revendications 1 à 3, dans laquelle la superficie d'ouverture de chaque trou traversant (70) est inférieure ou égale à 12,6 (mm²).

5. Unité en nid d'abeilles (1) selon l'une quelconque des revendications 1 à 4, dans laquelle la superficie d'ouverture de chaque trou traversant (70) est inférieure ou égale à 0,79 (mm²).

6. Unité en nid d'abeille (1) selon l'une quelconque des revendications 1 à 5, dans laquelle S (%) vérifie l'expression conditionnelle 25 (%) ≤ S ≤ 60 (%).

7. Unité en nid d'abeille (1) selon l'une quelconque des revendications 1 à 6, dans laquelle S (%) vérifie l'expression conditionnelle 30 (%) ≤ S ≤ 50 (%).

8. Unité en nid d'abeille (1) selon l'une quelconque des revendications 1 à 7, dans laquelle
la partie de liaison (50) entre enveloppe extérieure et corps en nid d'abeille formée dans la première région (RE1) et la partie de liaison (50) entre enveloppe extérieure et corps en nid d'abeille formée dans la deuxième région (RE2) sont formées symétriques dans la direction axiale par rapport à un plan de symétrie s'étendant dans une direction radiale du corps en nid d'abeille (10) en passant par le centre (Q) dans la direction axiale du corps en nid d'abeille (10), et
la partie de liaison (60) entre feuille plate et feuille ondulée formée dans la troisième région (RE3) et la partie de liaison (60) entre feuille plate et feuille ondulée formée dans la quatrième région (RE4) sont symétriques dans la direction axiale par rapport audit plan de symétrie.

9. Unité en nid d'abeilles (1) selon l'une quelconque des revendications 1 à 8, dans laquelle les trous traversants (70) sont formés en zigzag le long de la direction axiale.

10. Procédé de production de l'unité en nid d'abeille (1) selon la revendication 1,
le procédé comprenant :
une étape de mise en place de matériau de brasage (S1) consistant à agencer un matériau de brasage (50a) pour former les parties de liaison (50) entre enveloppe extérieure et corps en nid d'abeille,
dans laquelle étape de mise en place de matériau de brasage (S1) le matériau de brasage (50a) est placé en des positions présentes sur les régions d'extrémité (T) de la feuille plate (40) et la région de formation de trous (D) de la feuille plate (40), ladite position chevauchant au moins un trou traversant de la pluralité de trous traversants (72) formés dans la feuille plate (40),
étant entendu que, parmi la pluralité de trous traversants (72) formés dans la feuille plate (40), les trous traversants chevauchant le matériau de brasage (50a) sont définis comme des premiers trous traversants en chevauchement (721) ;
une étape de production de corps en nid d'abeilles (S2) consistant à produire le corps en nid d'abeilles (10) par empilement de la feuille plate (40) et de la feuille ondulée (30) ; et
une étape de chauffage (S3) consistant à chauffer l'enveloppe extérieure (20) et le corps en nid d'abeilles (10) inséré dans l'enveloppe extérieure (20),
étant entendu que, dans l'étape de chauffage (S3), le matériau de brasage (50a) qui est fondu se répand par l'intermédiaire des premiers trous traversants en chevauchement (721) et entre les premiers trous traversants en chevauchement (721) et des premières nervures (30a) parmi les nervures de la feuille ondulée (30), les premières nervures (30a) étant tournées vers les premiers trous traversants en chevauchement (721) dans la direction radiale du corps en nid d'abeilles (10).

11. Procédé de production de l'unité en nid d'abeille (1) selon la revendication 2,
le procédé comprenant :
une étape de mise en place de matériau de brasage (S1) consistant à agencer un matériau de brasage (61a) pour former les parties de liaison (60) entre feuille plate et feuille ondulée,
dans laquelle étape de mise en place de matériau de brasage (S1) le matériau de brasage (61a) est placé en des positions présentes sur les régions d'extrémité (T) de la feuille plate (40) et la région de formation de trous (D) de la feuille plate (40), ladite position chevauchant au moins un trou traversant de la pluralité de trous traversants (72) formés dans la feuille plate (40),
étant entendu que, parmi la pluralité de trous traversants (72) formés dans la feuille plate (40), les trous traversants chevauchant le matériau de brasage (61a) sont définis comme des deuxièmes trous traversants en chevauchement (722) ;
une étape de production de corps en nid d'abeilles (S2) consistant à produire le corps en nid d'abeilles (10) par empilement de la feuille plate (40) et de la feuille ondulée (30) ; et
une étape de chauffage (S3) consistant à chauffer l'enveloppe extérieure (20) et le corps en nid d'abeilles (10) inséré dans l'enveloppe extérieure (20),
étant entendu que, dans l'étape de chauffage (S3), le matériau de brasage (61a) qui est fondu se répand par l'intermédiaire des deuxièmes trous traversants en chevauchement (722) et entre les deuxièmes trous traversants en chevauchement (722) et des deuxièmes nervures (30b) parmi les nervures de la feuille ondulée (30), les deuxièmes nervures (30b) étant tournées vers les deuxièmes trous traversants en chevauchement (722) dans la direction radiale du corps en nid d'abeilles (10).

12. Procédé de fabrication de l'unité en nid d'abeille (1) selon la revendication 2,
le procédé comprenant :
une étape de mise en place de matériau de brasage (S1) consistant à agencer un matériau de brasage (61a) pour former les parties de liaison (60) entre feuille plate et feuille ondulée,
dans laquelle étape de mise en place de matériau de brasage (S1) le matériau de brasage (61a) est placé en des positions présentes sur les régions d'extrémité (T) de la feuille ondulée (30) et la région de formation de trous (D) de la feuille ondulée (30) ;
une étape de production de corps en nid d'abeilles (S2) consistant à produire le corps en nid d'abeilles (10) par empilement de la feuille plate (40) et de la feuille ondulée (30),
dans laquelle étape de production de corps en nid d'abeilles (S2) la feuille plate (40) et la feuille ondulée (30) sont empilées de façon que le matériau de brasage (61a) chevauche au moins un trou traversant parmi la pluralité de trous traversants (72) formés dans la feuille plate (40),
étant entendu que, parmi la pluralité de trous traversants (72) formés dans la feuille plate (40), les trous traversants chevauchant le matériau de brasage (61a) sont définis comme des troisièmes trous traversants en chevauchement (723) ; et
une étape de chauffage (S3) consistant à chauffer l'enveloppe extérieure (20) et le corps en nid d'abeilles (10) inséré dans l'enveloppe extérieure (20),
étant entendu que, dans l'étape de chauffage (S3), le matériau de brasage (61a) qui est fondu se répand par l'intermédiaire des troisièmes trous traversants en chevauchement (723) et entre les troisièmes trous traversants en chevauchement (723) et des deuxièmes nervures (30b) parmi les nervures de la feuille ondulée (30), les deuxièmes nervures (30b) étant tournées vers les troisièmes trous traversants en chevauchement (723) dans la direction radiale du corps en nid d'abeilles (10).

13. Procédé de production selon l'une quelconque des revendications 10 à 12, dans lequel une épaisseur dans la direction radiale du matériau de brasage (50a, 61a) placé dans l'étape de mise en place de matériau de brasage (S1) est inférieure ou égale à 0,1 mm, de préférence supérieure ou égale à 0,01 mm et inférieure ou égale à 0,05 mm.
